# EUROPÄISCHE PATENTANMELDUNG

(11) **EP 4 810 155 A1**
(43) Veröffentlichungstag der Anmeldung: **23.09.2026**
(21) Anmeldenummer: 25164631.1
(22) Anmeldetag: 19.03.2025
(51) Int. Cl.: B01J 31/18

(54) **PHOSPHITE UND DEREN EINSATZ IN DER KATALYSE VON HYDROFORMYLIERUNGSVERFAHREN**

(71) Anmelder: Evonik Oxeno GmbH & Co. KG, 45772 Marl (DE)
(72) Erfinder: FRANKE, Robert, 45772 Marl (DE); BÜKER, Julia, 44803 Bochum (DE); SALE, Anna Chiara, 40474 Düsseldorf (DE); BÖRNER, Armin, 18059 Rostock (DE); HOLZ, Jens, 18196 Kessin (DE); ROMEIKE, Kerstin, 18109 Rostock (DE); WENZEL, Gudrun, 18196 Kessin (DE)
(74) Vertreter: Evonik Patent Association

(57) **Zusammenfassung**

Phosphite und deren Einsatz in der Katalyse von Hydroformylierungsverfahren.

## Beschreibung

Die Erfindung betrifft Phosphite und deren Einsatz in der Katalyse von Hydroformylierungsverfahren.

Phosphorhaltige Verbindungen spielen als Liganden in einer Vielzahl von Reaktionen eine entscheidende Rolle, z.B. in der Hydrierung, in der Hydrocyanierung und auch in der Hydroformylierung.

Die technische Aufgabe der Erfindung ist die Bereitstellung einer Verbindung, mit welcher bei der Hydroformylierung von Olefinen eine gute Ausbeute erzielt werden kann.

Die Aufgabe wird gelöst durch eine Verbindung gemäß Anspruch 1.

Verbindung gemäß einer der Formeln (**1**) bis (**17**):

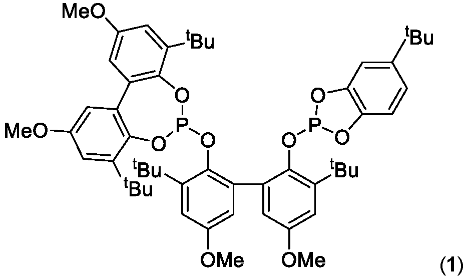

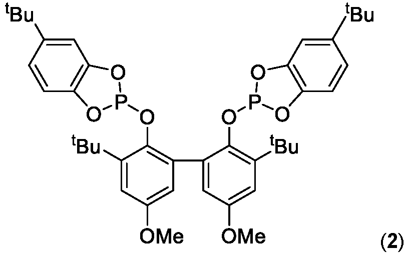

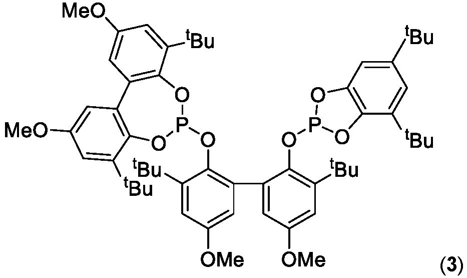

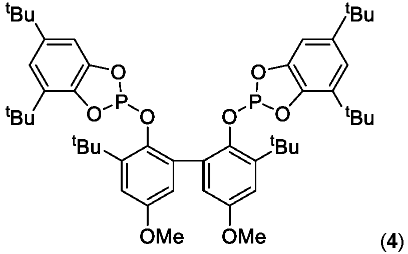

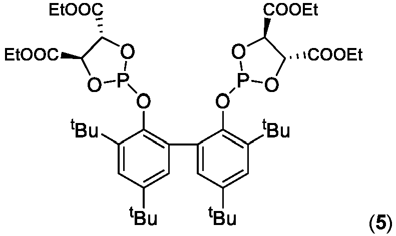

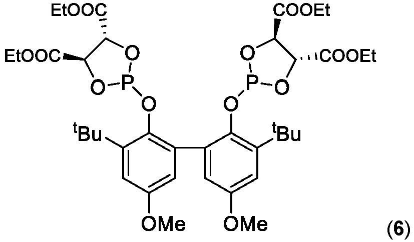

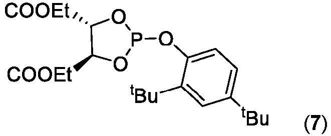

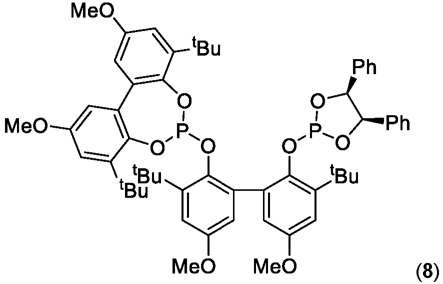

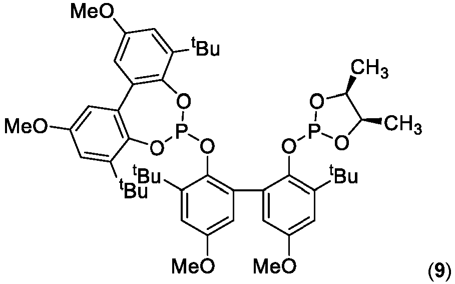

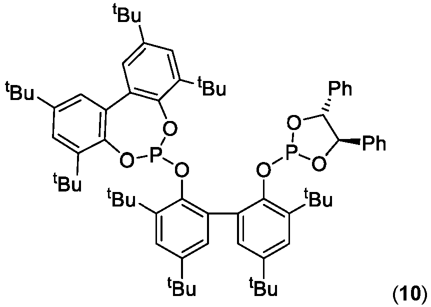

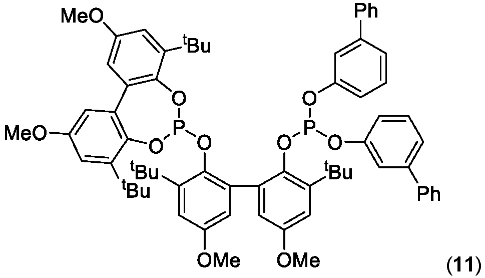

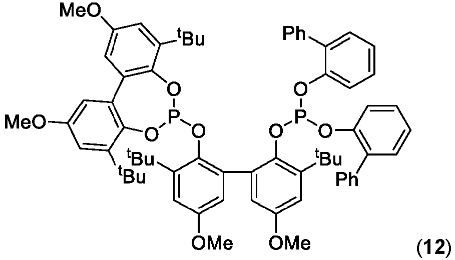

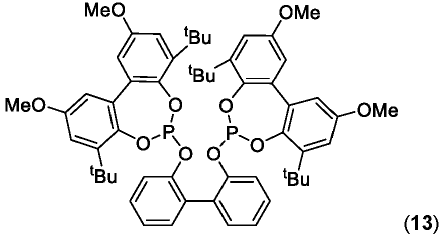

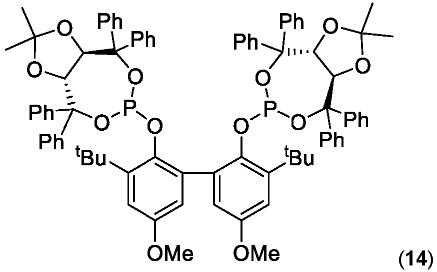

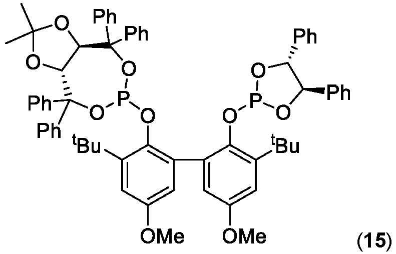

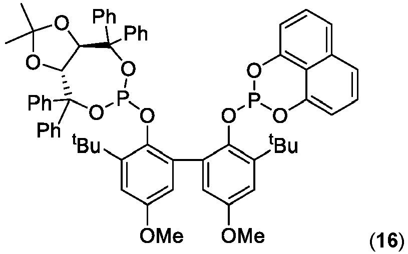

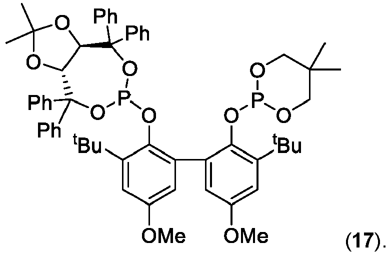

Im Folgenden soll die Erfindung anhand von Ausführungsbeispielen näher erläutert werden.

### Synthese

### 4,8-Di-tert-butyl-6-((3,3'-di-tert-butyl-2'-((5-(tert-butyl)benzo[d][1,3,2]dioxaphosphol-2-yl)oxy)-5,5'-dimethoxy-[1,1'-biphenyl]-2-yl)oxy)-2,10-dimethoxydi-benzo[d,f][1,3,2]dioxaphosphepin (Verbindung 1)

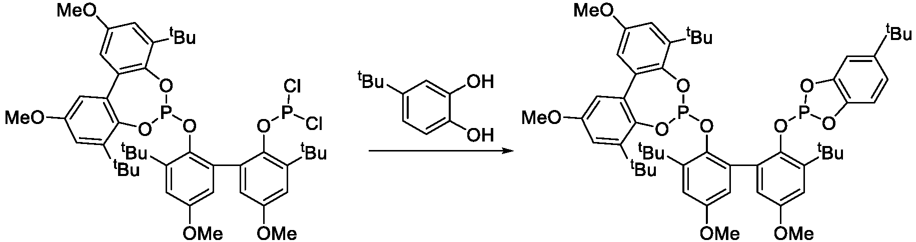

Zu einer Lösung von 4,8-Di-*tert*-butyl-6-((3,3'-di-tert-butyl-2'-((dichlorophosphanyl)oxy)-5,5'-dimethoxy-[1,1'-biphenyl]-2-yl)oxy)-2,10-dimethoxydibenzo[*d,f*][1,3,2]dioxaphosphepin (804 mg; 0.95 mmol) in Toluol (8 ml) wird bei Raumtemperatur eine Mischung aus 4-*tert*-Butylcatechol (158 mg; 0.95 mmol) und Triethylamin (384 mg, 0.38 mmol) in Toluol (4 ml) getropft. Man lässt über Nacht rühren, filtriert und engt das Filtrat im Vakuum zur Trocknen ein. Der erhaltene Feststoff wird bei 60°C/0.1 mbar getrocknet.

Ausbeute: 765 mg weißer Feststoff (81%).

³¹P-NMR (CD₂Cl₂): d 143.4, 143.2, 139.8 und 140.2 (2x br s, überlappende Signale), 139.6 (d, *J* 22.9 Hz), 139.5 (d, *J* 22.9 Hz), +136.3, +136.2 ppm. Diastereomerengemisch.

¹H-NMR (CD₂Cl₂): d 7.29-6.67 (11H, m, 11Hₐᵣ), 3.80-3-87 (12H, s, 4xOCH₃), 1.42-1.09 (45H, s, 5xC(CH₃)₃).

HRMS (ESI-TOF) [M+H]⁺: *m*/*z* berechnet: für C₅₄H₆₈O₁₀P₂ 939.4366, gefunden: 939.4369.

| | | | | |
|---|---|---|---|---|
| Elementaranalyse: | berechnet: | C 69.07% | H 7.30% | P 6.60% |
| | gefunden: | C 69.31% | H 7.42% | P 6.45% |

### 2,2'-((3,3'-Di-tert-butyl-5,5'-dimethoxy-[1,1'-biphenyl]-2,2'-diyl)bis(oxy))bis(5-(tert.-butyl)benzo[d][1,3,2]dioxaphosphol) (Verbindung 2)

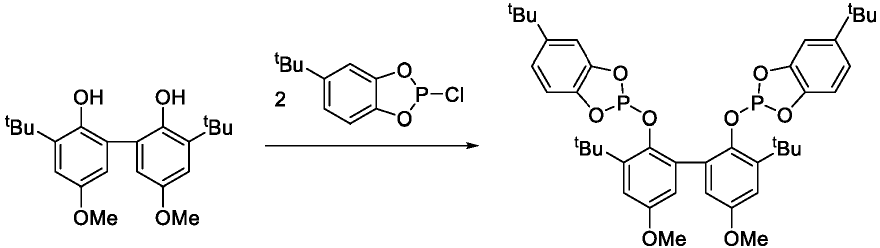

Zu einer auf 0 °C gekühlten Lösung des P-CI-Bausteins (483 mg; 2.09 mmol) in THF (3 ml) wird unter Rühren eine Mischung aus 3,3'-Di-*tert*-butyl-5,5'-dimethoxy-[1,1'-biphenyl]-2,2'-diol (358 g; 1.00 mmol) und Pyridin (240 mg, 3.09 mmol) in THF (3 ml) getropft. Man lässt auf Raumtemperatur erwärmen und rührt über Nacht. Man filtriert und engt das Filtrat im Vakuum zur Trocknen ein. Der erhaltene Feststoff wird zunächst bei 60°C/0.1 mbar getrocknet und dann in heißem Acetonitril (7 ml) gelöst. Nach der Lagerung bei -23 °C, Filtration und Trocknung wird das gewünschte Produkt erhalten.

Ausbeute: 275 mg weißer Feststoff (37%).

³¹P-NMR (CD₂Cl₂): d +138.1, +137.7, +137.5, 137.3, +137.0, +136.8 (d, *J* 8.2 Hz), +134.8 (d, *J* 8.2 Hz), 134.1, +132.1 (d, *J* 8.9 Hz), 129.7 (d, *J*8.9 Hz) ppm. Diastereomerengemisch.

¹H-NMR (CD₂Cl₂): d 7.17-6.79(10H, m, 10xHₐᵣ), 3.88-3.82 (6H, s, 2xOCH₃) 1.49-1.18 (36H, s, 4xC(CH₃)₃).

HRMS (ESI-TOF) [M+H]⁺: *m*/*z* berechnet: für C₄₂H₅₂O₈P₂ 747.3215, gefunden: 747.3216.

| | | | | |
|---|---|---|---|---|
| Elementaranalyse: | berechnet: | C 67.55% | H 7.02% | P 8.29% |
| | gefunden: | C 67.37% | H 7.17% | P 8.35% |

### 4,8-Di-tert-butyl-6-((3,3'-di-tert-butyl-2'-((4,6-di-tert-butylbenzo[d][1,3,2]dioxa-phosphol-2-yl)oxy)-5,5'-dimethoxy-[1,1'-biphenyl]-2-yl)oxy)-2,10-dimethoxydi-benzo[d,f][1,3,2]dioxaphosphepin (Verbindung 3)

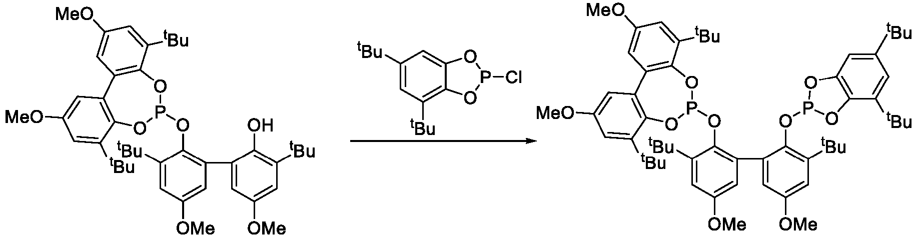

Zu einer auf -20 °C gekühlten Lösung von 3,3'-Di-*tert*-butyl-2'-((4,8-di-tert-butyl-2,10-dimethoxydibenzo[*d,f*][1,3,2]dioxaphosphepin-6-yl)oxy)-5,5'-dimethoxy-[1,1'-biphenyl]-2-ol (695 mg; 0.93 mmol) in THF (7 ml) wird n-BuLi gegeben (0.93 mmol in 2 ml Hexan) und es wird 20 min weiter gerührt. Die so erhaltene Lösung tropft man zu einer Lösung des P-Cl-Bausteins (268 mg; 0.93 mmol) in THF (3 ml). Man rührt über Nacht bei Raumtemperatur, entfernt das Lösungsmittel im Vakuum, nimmt den Rückstand in Toluol (6 ml) auf und filtriert. Das Filtrat wird abschließend im Vakuum eingeengt. Der erhaltene Rückstand wird zwei Stunden bei 50°C/0.1 mbar getrocknet und in heißem Acetonitril (8 ml) gelöst. Beim Abkühlen bildet sich ein weißer Feststoff, der abgetrennt und getrocknet wird.

Ausbeute: 680 mg weißer Feststoff (73%).

³¹P-NMR (CD₂Cl₂): d +140.3, +140.0 (d, *J* 37.0 Hz), +139.5, +139.4, 135.6 (d, *J* 37.0 Hz); 135.3 ppm. Diastereomerengemisch.

¹H-NMR (CD₂Cl₂): d 7.14-6.67 (10H, m, 10Hₐᵣ), 3.89-3.80 (12H, s, 4xOCH₃), 1.47-1.07 (45H, s, 6xC(CH₃)₃).

| | | | | |
|---|---|---|---|---|
| Elementaranalyse: | berechnet: | C 70.00% | H 7.70% | P 6.22% |
| | gefunden: | C 70.05% | H 7.67% | P 6.17% |

### 2,2'-((3,3'-Di-tert.-butyl-5,5'-dimethoxy-[1,1'-biphenyl]-2,2'-diyl)bis(oxy))bis(4,6-di-tert.-butylbenzo[d][1,3,2]dioxaphosphol) (Verbindung 4)

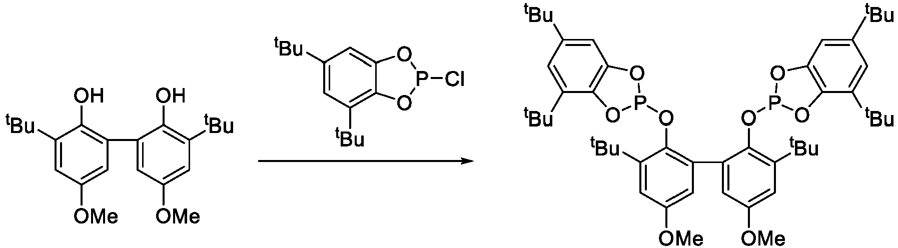

Zu einer auf 0 °C gekühlten Lösung des P-CI-Bausteins (500 g; 1.74 mmol) in THF (3 ml) wird eine Mischung aus 3,3'-Di-*tert*-butyl-5,5'-dimethoxy-[1,1'-biphenyl]-2,2'-diol (0.292 g; 0.81 mmol) und Pyridin (200 mg, 2.57 mmol) in THF (3 ml) getropft. Man rührt anschließend über Nacht bei Raumtemperatur, filtriert und engt das Filtrat im Vakuum bis zur Trocknen ein. Der erhaltene hellgelbe Feststoff wird aus heißem Acetonitril umkristallisiert.

Ausbeute: 400 mg weißer Feststoff (57%).

³¹P-NMR (CD₂Cl₂): d +137.6, +135.3, +134.5 (d, *J* 30.6 Hz), +133.7 (d, *J* 30.6 Hz), +131,2 (s) ppm. Diastereomerengemisch.

¹H-NMR (CD₂Cl₂): d 7.18-6.63 (8H, m, 8xHₐᵣ), 3.88-3.66 (6H, s, 2xOCH₃), 1.51-1.29 (54H, s, 6xC(CH₃)₃) ppm.

HRMS (ESI-TOF) [M+H]⁺: *m*/*z* berechnet: für C₅₀H₆₈O₈P₂ 881.4287, gefunden: 881.4274.

| | | | | |
|---|---|---|---|---|
| Elementaranalyse: | berechnet: | C 69.91% | H 7.98% | P 7.21% |
| | gefunden: | C 70.11% | H 7.84% | P 6.30% |

### Tetraethyl 2,2'-((3,3',5,5'-tetra-tert-butyl-[1,1'-biphenyl]-2,2'-diyl)bis(oxy))(4R,4'R,5R,5'R)-bis(1,3,2-dioxaphospholan-4,5-dicarboxylat) (Verbindung 5)

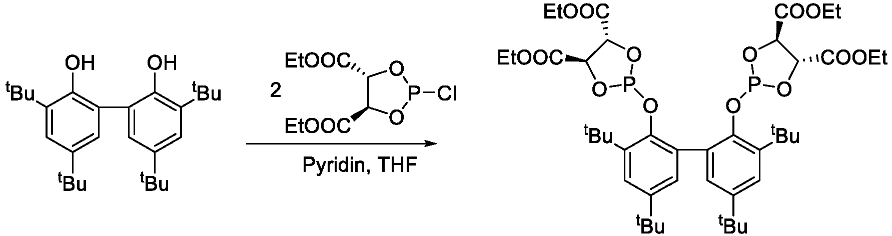

Eine Lösung von 3,3',5,5'-Tetra-*tert*-butyl-[1,1'-biphenyl]-2,2'-diol (411 mg, 1.00 mmol) und Pyridin (166 mg, 2.10 mmol) in THF (6 ml) wird bei 0°C (Eisbad) zu der in THF (4 ml) gelösten P-CI-Verbindung (568 mg, 2.10 mmol) langsam unter Rühren getropft. Nach 30 Minuten lässt man auf Raumtemperatur erwärmen und rührt über Nacht weiter. Zur Aufarbeitung wird vom ausgefallenen Niederschlag abfiltriert und dieser einmal mit THF (3 ml) nachgewaschen. Das Lösemittel der vereinigten Lösungen wird unter Vakuum entfernt und ein zähes Öl verbleibt als Rückstand. Das Produkt wird durch Säulenchromatographie (Eluent: Cyclohexan/AcOEt 98/2 bis 90/10) isoliert. Durch die Chiralität in den Dioxolan-Einheiten liegt das Produkt als ein Gemisch von zwei Diastereomeren auf Grund der möglichen axialen Chiralität vor.

Ausbeute: 570 mg weißer Feststoff (65%), Smp. = 163-167 °C ³¹P-NMR (CDCl₃): d +139.4 ppm (84%, *Diastereomer A*), +138.9 ppm (16%, *Diasteroemer B*)*.*

¹H-NMR (CDCl₃) *Diastereomer A*: d 7.41 (2H, m, 2xHₐᵣ), 7.18 (2H, m, 2xHₐᵣ), 4.86 (2H, d, *J* 7.5 Hz, 2xCHO), 4.54 (2H, m, 2xCHO), 4.31-4.14 (8H, m, 4xCH₂O), 1.39 (18H, s, 2xC(CH₃)₃), 1.31 (18H, s, 2xC(CH₃)₃), 1.28 (6H, t, *J 7.2* Hz, 2xCH₃), 1.27 (6H, t, *J* 7.2 Hz, 2xCH₃). *Diastereomer B:* d 7.41 (2H, m, 2xHₐᵣ), 7.07 (2H, m, 2xHₐᵣ), 4.74 (2H, d, *J* 8.3 Hz, 2xCHO), 4.51 (2H, m, 2xCHO), 4.31-4.14 (8H, m, 4xCH₂O), 1.42 (9H, s, C(CH₃)₃), 1.42 (18H, s, 2xC(CH₃)₃), 1.30 (9H, s, C(CH₃)₃), 1.28 (6H, t, *J* 7.2 Hz, 2xCH₃),1.27 (6H, t, *J* 7.2 Hz, 2xCH₃);

¹³C-NMR (CDCl₃) *Diastereomer A*: d 168.3 (m, C=O), 167.8 (C=O), 147.8 (m, 2xCₐᵣ), 147.4 (2xCₐᵣ), 140.1 (2xCₐᵣ), 130.8 (2xCₐᵣ), 128.2 (2xCₐᵣH), 124.6 (2xCₐᵣH), 77.6 (m, 2xCHO), 75.5 (m, 2xCHO), 61.9 (4xCH₂O), 35.0 (2x^{t}C), 34.5 (2x^{t}C), 31.3 (6xCH₃), 30.4 (6xCH₃), 14.1 (2xCH₃), 14.0 (2xCH₃). *Diastereomer B:* d 168.0 (m, C=O), 167.5 (C=O), 147.9 (m, 2xCₐᵣ), 145.0 (2xCₐᵣ), 140.7 (2xCₐᵣ), 130.9 (2xCₐᵣ), 128.0 (2xCₐᵣH), 124.5 (2xCₐᵣH), 77.7 (m, 2xCHO), 75.1 (m, 2xCHO), 61.9 (4xCH₂O), 35.1 (^{t}C), 35.0 (^{t}C), 31.3 (6xCH₃), 30.5 (6xCH₃), 14.1 (2xCH₃), 14.0 (2xCH₃).

| | |
|---|---|
| HRMS (ESI-TOF): | [M+H]⁺: *m*/*z* berechnet: für C₄₄H₆₄O₁₄P₂ 879.3849, gefunden: 879.3868. |
| | [M+Na]⁺: *m*/*z* berechnet: für C₄₄H₆₄O₁₄P₂ 901.3663, gefunden: 901.3679. |

### Tetraethyl 2,2'-((3,3'-di-tert-butyl-5,5'-dimethoxy-[1,1'-biphenyl]-2,2'-diyl)bis(oxy))(4R,4'R,5R,5'R)-bis(1,3,2-dioxaphospholan-4,5-dicarboxylat) (Verbindung 6)

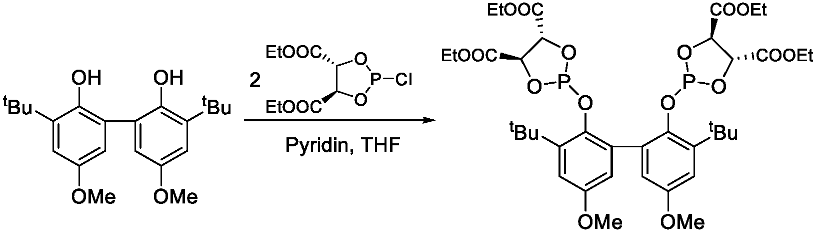

Herstellung erfolgt analog der zuvor beschriebenen Verbindung. Als Biphenol kam das 3,3'-Di-*tert*-butyl-5,5'-dimethoxy-[1,1'-biphenyl]-2,2'-diol (358 mg, 1.00 mmol) zum Einsatz. Nach der Säulenchromatographie (Eluent: Cyclohexan/AcOEt 98/2 bis 90/10) wurde das Produkt ebenso als ein Gemisch von zwei Diastereomeren isoliert.

Ausbeute: 270 mg Sirup (33%).

³¹P-NMR (CDCl₃): d +140.0 ppm (16%, *Diastereomer A*), +139.9 ppm (84%, *Diastereomer B*)*.*

¹H-NMR (CD₂Cl₂) *Diastereomer A:* d 6.95 (2H, d, *J* 3.2 Hz, 2xHₐᵣ), 6.59 (2H, d, *J* 3.2 Hz, 2xHₐᵣ), 4.79 (2H, d, *J* 7.9 Hz, 2xCH-O), 4.63-4.58 (2H, m, 2xCH-O), 4.33-4.17 (8H, m, 4xCH₂O), 3.78 (2xOCH₃), 1.42 (18H, s, 2xC(CH₃)₃). *Diastereomer B:* d 6.98 (2H, d, *J* 3.1 Hz, 2xHₐᵣ), 6.72 (2H, d, *J* 3.1 Hz, 2xHₐᵣ), 4.97 (2H, d, *J* 7.2 Hz, 2xCH-O), 4.63-4.58 (2H, m, 2xCH-O), 4.33-4.17 (8H, m, 4xCH₂O), 3.80 (2xOCH₃), 1.39 (18H, s, 2xC(CH₃)₃).

¹³C-NMR (CDCl₃) *Diastereomer A*: d 168.5 (m, 2xC=O), 168.1 (2xC=O), 155.3 (2xCₐᵣ-OMe), 144.2 (m, 2xCₐᵣ), 143.3 (2xCₐᵣ), 133.2 (2xCₐᵣ), 130.8 (2xCₐᵣ), 115.0 (2xCₐᵣH), 114.2 (2xCₐᵣH), 78.1 (m, 2xCHO), 75.7 (m, 2xCHO), 62.5 (2xCH₂O), 62.4 (2xCH₂O), 55.8 (2xOCH₃), 35.4 (2x^{t}C), 30.8 (6xCH₃), 14.3 (2xCH₃), 14.0 (2xCH₃). *Diastereomer B*: d 168.5 (m, 2xC=O), 168.1 (2xC=O), 155.3 (2xCₐᵣ-OMe), 144.2 (m, 2xCₐᵣ), 143.3 (2xCₐᵣ), 132.2 (2xCₐᵣ), 115.4 (2xCₐᵣH), 114.9 (2xCₐᵣH), 78.0 (m, 2xCHO), 76.1 (m, 2xCHO), 62.5 (2xCH₂O), 62.4 (2xCH₂O), 55.9 (2xOCH₃), 35.3 (2x^{t}C), 30.5 (6xCH₃), 14.1 (2xCH₃), 14.3 (2xCH₃).

### Diethyl (4R,5R)-2-(2,4-di-tert-butylphenoxy)-1,3,2-dioxaphospholan-4,5-dicarboxylat (Verbindung 7)

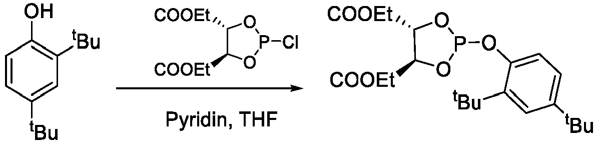

Eine Lösung von 2,4-Di-*tert*-butylphenol (309 mg, 1.50 mmol) und Pyridin (119 mg, 1.50 mmol) in THF (8 ml) wird bei 0 °C (Eisbad) zu der in THF (3 ml) gelösten P-CI-Verbindung (406 mg, 1.50 mmol) langsam unter Rühren getropft. Nach 30 Minuten lässt man auf Raumtemperatur erwärmen und rührt über Nacht weiter. Zur Aufarbeitung wird vom ausgefallenen Pyridiniumhydrochlorid abfiltriert und dieser einmal mit THF (3 ml) nachgewaschen. Das Lösemittel der vereinigten Filtrate wird unter Vakuum entfernt und ein Öl verbleibt als Rückstand. Das Produkt wird durch Säulenchromatographie (Eluent: Cyclohexan/AcOEt 98/2) isoliert und gereinigt.

Ausbeute: 440 mg farbloses Öl (66%).

³¹P-NMR (CDCl₃): d +136.1 ppm.

¹H-NMR ( CDCl₃): d 7.34 (1H, d, *J* 2.5 Hz, Hₐᵣ), 7.14 (1H, dd, *J* 8.3, 2.5 Hz, Hₐᵣ), 7.03 (1H, d, *J* 8.3 Hz, Hₐᵣ), 5.41 (1H, d, *J* 5.5 Hz, CH-O), 4.97 (1H, dd, *J* 9.6, 5.5 Hz, CH-O), 4.32 (2H, dq, J 7.2, 0.9 Hz, CH₂-O), 4.16 (2H, m, CH₂-O), 1.34 (9H, s, C(CH₃)₃), 1.34 (3H, t, *J* 7.1 Hz, CH₃), 1.29 (9H, s, C(CH₃)₃), 1.15 (3H, t, *J* 7.1 Hz, CH₃).

¹³C-NMR (CDCl₃): d 168.4 (d, *J* 4.4 Hz, C=O), 168.3 (C=O), 147.7 (d, *J* 7.7 Hz, Cₐᵣ), 146.4 (Cₐᵣ), 139.4 (d, *J* 2.4 Hz, Cₐᵣ), 124.3 (CₐᵣH), 123.5 (CₐᵣH), 119.6 (d, *J* 15.5 Hz, CₐᵣH), 76.9 (d, *J* 9.4 Hz, CHO), 75.8 (d, *J* 8.8 Hz, CHO), 62.4 (CH₂O), 62.3 (CH₂O), 34.4 (^{t}C), 34.4 (^{t}C), 31.4 (3xCH₃), 30.0 (3xCH₃), 14.1 (CH₃), 13.8 (CH₃).

### 4,8-Di-tert-butyl-6-((3,3'-di-tert-butyl-2'-(((4S,5R)-4,5-diphenyl-1,3,2-dioxaphospholan-2-yl)oxy)-5,5'-dimethoxy-[1,1'-biphenyl]-2-yl)oxy)-2,10-dimethoxydibenzo[d,f][1,3,2]dioxaphosphepin (Verbindung 8)

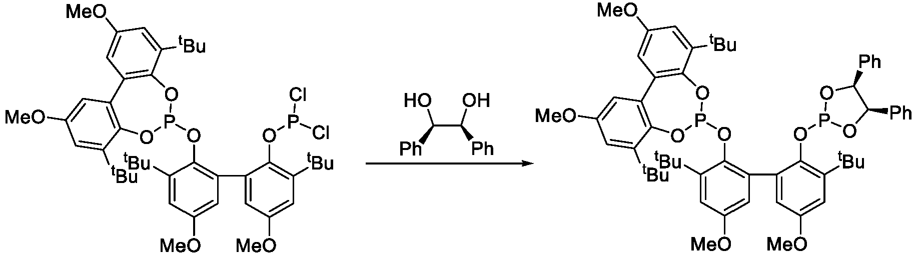

Zu einer Lösung von meso-Hydrobenzoin (147 mg, 0.69 mmol) in THF (2 ml) wurden bei -20 °C eine Lösung von n-Butyllithium (0.533 M in Hexan, 2.58 ml, 1.38 mmol) getropft, nach 20 min ließ man die Reaktionslösung auf Raumtemperatur erwärmen und tropfte diese anschließend zu einer Lösung von 4,8-Di-*tert*-butyl-6-((3,3'-di-*tert*-butyl-2'-((dichlorophosphanyl)oxy)-5,5'-dimethoxy-[1,1'-biphenyl]-2-yl)oxy)-2,10-dimethoxydibenzo[*d,f*][1,3,2]dioxaphosphepin (582 mg, 0.69 mmol) in THF (3 ml). Nach dem Rühren über Nacht wurde das Lösemittel unter Vakuum entfernt und der Rückstand mit Toluol (4 ml) versetzt. Nach Abfiltrieren der unlöslichen Bestandteile wurde das Filtrat erneut unter Vakuum eingeengt und das Rohprodukt bei 60°C getrocknet. Der erhaltene weiße Feststoff wurde durch Säulenchromatographie (Eluent: Heptan/Dichlormethan 1/2) gereinigt und das Produkt als weißer Feststoff isoliert.

Ausbeute: 600 mg weißer Feststoff (88%);

³¹P-NMR (CD₂Cl₂): d +147.6/+138.5 ppm (76%, 2xd, J 59 Hz, *Diastereomer A*) und +136.6/+140.4 ppm (24%, d, *J* 13 Hz + br d, *Diastereomer B*).

¹H-NMR (CD₂Cl₂): *Diastereomer A,* d 7.20-7.00 (12H, m, 12xHₐᵣ), 6.96 (1H, d, *J* 3.1 Hz, Hₐᵣ), 6.93 (1H, d, *J* 3.1 Hz, Hₐᵣ), 6.87 (1H, d, *J* 3.2 Hz, Hₐᵣ), 6.76 (1H, d, *J* 3.2 Hz, Hₐᵣ), 6.65 (1H, d, *J* 3.2 Hz, Hₐᵣ), 6.58 (1H, d, *J* 3.2 Hz, Hₐᵣ), 5.49 (1H, dd, *J* 7.4, 4.8 Hz, CH-O), 5.30 (1H, dd, *J* 13.1, 7.4 Hz, CH-O), 3.85 (3H, s, OCH₃), 3.82 (3H, s, OCH₃), 3.78 (3H, s, OCH₃), 3.42 (3H, s, OCH₃), 1.48 (9H, s, C(CH₃)₃), 1.45 (9H, s, C(CH₃)₃), 1.41 (9H, s, C(CH₃)₃), 1.10 (9H, s, C(CH₃)₃). *Diastereomer B*: d 7.08-7.01 (7H, m, 7xHₐᵣ), 6.97 (1H, d, *J* 3.1 Hz, Hₐᵣ), 6.91 (1H, d, *J* 3.1 Hz, Hₐᵣ), 6.89 (1H, d, *J* 3.2 Hz, Hₐᵣ), 6.88-6.83 (2H, m, 2xHₐᵣ), 6.82-6.75 (4H, m, 4xHₐᵣ), 6.67 (2H, m, 2xHₐᵣ), 5.71 (1H, dd, *J* 6.9, 2.2 Hz, CH-O), 5.57 (1H, dd, *J* 6.9,

1.5 Hz, CH-O), 3.81 (3H, s, OCH₃), 3.80 (3H, s, OCH₃), 3.78 (3H, s, OCH₃), 3.73 (3H, s, OCH₃), 1.53 (9H, s, C(CH₃)₃), 1.51 (9H, s, C(CH₃)₃), 1.29 (9H, s, C(CH₃)₃), 0.93 (9H, s, C(CH₃)₃).

HRMS (ESI-TOF) [M+H]⁺: *m*/*z* berechnet: für C₅₈H₆₈O₁₀P₂ 987.4366, gefunden: 987.4384.

HRMS (ESI-TOF) [M+Na]⁺: *m*/*z* berechnet: für C₅₈H₆₈O₁₀P₂ 1009.4186, gefunden: 1009.4202.

| | | | | |
|---|---|---|---|---|
| Elementaranalyse: | berechnet: | C 70.57% | H 6.94% | P 6.28% |
| | gefunden: | C 70.34% | H 6.70% | P 6.10% |

Elementaranalyse: berechnet: C 70.57% H 6.94% P 6.28% gefunden: C 70.34% H 6.70% P 6.10%

### 4,8-Di-tert-butyl-6-((3,3'-di-tert-butyl-2'-(((4S,5R)-4,5-dimethyl-1,3,2-dioxaphospholan-2-yl)oxy)-5,5'-dimethoxy-[1,1'-biphenyl]-2-yl)oxy)-2,10-dimethoxydibenzo[d,f][1,3,2]dioxaphosphepin (Verbindung 9)

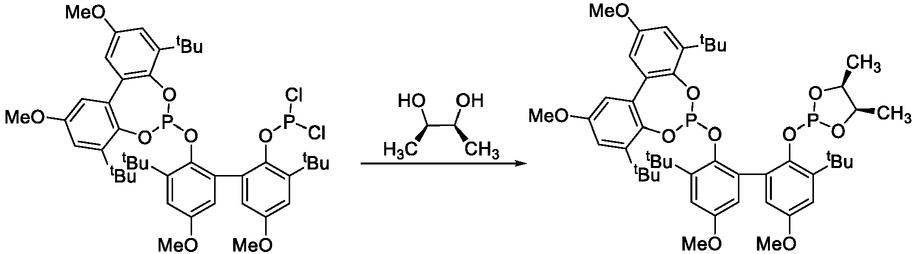

Zu einer Lösung von *meso*-2,3-Butandiol (67 mg, 0.74 mmol) in THF (4 ml) wurden bei -20°C eine

Lösung von *n*-Butyllithium (0.533 M in Hexan, 2.79 ml, 1.49 mmol) getropft. Nach ca. 20 min ließ man die Reaktionslösung auf Raumtemperatur erwärmen und versetzte diese anschließend mit einer Lösung von 4,8-Di-*tert*-butyl-6-((3,3'-di-*tert*-butyl-2'-((dichlorophosphanyl)oxy)-5,5'-dimethoxy-[1,1'-biphenyl]-2-yl)oxy)-2,10-dimethoxydibenzo[*d,f*][1,3,2]dioxaphosphepin (0.629 g, 0.744 mmol) in THF (2 ml). Nach dem Rühren über Nacht wurde das Lösemittel unter Vakuum entfernt und der Rückstand mit Toluol (7 ml) versetzt und die ungelösten Bestandteile abfiltriert. Das Filtrat wurde erneut unter Vakuum eingeengt und das Rohprodukt bei 60°C getrocknet. Zur Reinigung wurde dieser in Acetonitril in der Siedehitze gelöst und nach Abkühlen und Aufbewahrung im Tiefkühlschrank der ausgefallene Niederschlag rasch abfiltriert und das Produkt als weißer Feststoff isoliert.

Ausbeute: 270 mg weißer Feststoff (42%).

³¹P-NMR (CD₂Cl₂): d +144.6/+139.3 ppm (87%, 2xd, J 24 Hz, *Diastereomer A*), +140.8/+134.2 ppm (13%, 2xd, *J* 9.1 Hz, *Diastereomer B*)*.*

¹H-NMR (CD₂Cl₂): *Diastereomer A,* d 7.06-6.59 (8H, m, 8xHₐᵣ), 4.24-4.08 (2H, m, 2xCH-O), 3.78 (3H, s, OCH₃), 3.78 (3H, s, OCH₃), 3.78 (3H, s, OCH₃), 3.76 (3H, s, OCH₃), 1.44 (9H, s, C(CH₃)₃), 1.38 (9H, s, C(CH₃)₃), 1.30 (9H, s, C(CH₃)₃), 1.12 (9H, s, C(CH₃)₃); *Diastereomer B:* d 7.06-6.59 (8H, m, 8xHₐᵣ), 4.52 (1H, m, CH-O), 4.33 (1H, m, CH-O), 3.80 (3H, s, OCH₃), 3.79 (3H, s, OCH₃), 3.78 3.77 (3H, s, OCH₃), 3.76 (3H, s, OCH₃), 1.41 (18H, s, 2xC(CH₃)₃), 1.30 (9H, s, C(CH₃)₃), 1.17 (9H, s, C(CH₃)₃).

HRMS (ESI-TOF) [M+H]⁺: *m*/*z* berechnet: für C₄₈H₆₄O₁₀P₂ 863.4053, gefunden: 863.4050.

HRMS (ESI-TOF) [M+Na]⁺: *m*/*z* berechnet: für C₄₈H₆₄O₁₀P₂ 885.3867, gefunden: 885.3868.

| | | | | |
|---|---|---|---|---|
| Elementaranalyse: | berechnet: | C 66.81% | H 7.48% | P 7.18% |
| | gefunden: | C 66.41% | H 7.04% | P 7.50% |

### 2,4,8,10-Tetra-tert-butyl-6-((3,3',5,5'-tetra-tert-butyl-2'-(((4R,5R)-4,5-diphenyl-1,3,2-dioxaphospholan-2-yl)oxy)-[1,1'-biphenyl]-2-yl)oxy)dibenzo[d,f][1,3,2]dioxaphosphepin (Verbindung 10)

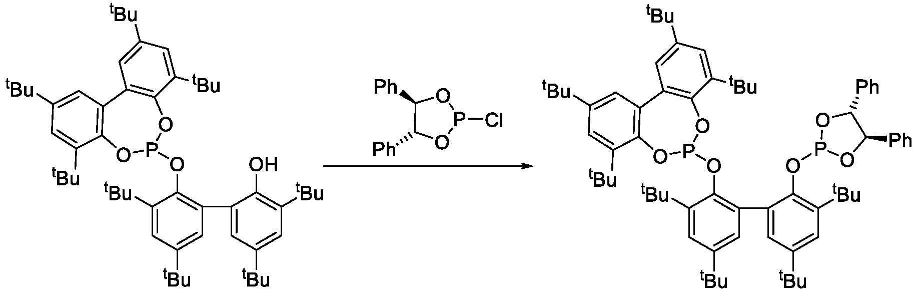

Zu einer auf -20 °C gekühlten Lösung von 3,3',5,5'-Tetra-*tert*-butyl-2'-((2,4,8,10-tetra-*tert-*butyldibenzo[*d,f*][1,3,2]dioxaphosphepin-6-yl)oxy)-[1,1'-biphenyl]-2-ol (474 mg, 0.56 mmol) in THF (3 ml) wurde eine Lösung von *n*-Butylithium (0.533 M in Hexan, 1.10 ml, 0.59 mmol) getropft. Nach 20 min ließ man die Reaktionslösung auf 0 °C erwärmen und versetzte diese anschließend tropfenweise mit einer Lösung von (4*R*,5*R*)-2-chloro-4,5-diphenyl-1,3,2-dioxaphospholan (163 mg, 0.59 mmol) in THF (3 ml). Nach dem Rühren über Nacht bei Raumtemperatur wurde das Lösemittel unter Vakuum entfernt, der weiße Rückstand mit Toluol (7 ml) versetzt und die ungelösten Bestandteile abfiltriert. Das Filtrat wurde erneut unter Vakuum eingeengt und das Rohprodukt bei 60°C getrocknet. Zur Reinigung wurde dieses in Acetonitril in der Siedehitze gelöst, nach Abkühlen der ausgefallene Niederschlag abfiltriert und das Produkt als weißer Feststoff isoliert.

Ausbeute: 390 mg weißer Feststoff (64%).

¹P-NMR (CD₂Cl₂): d +142.4/+140.5 ppm (82%. d, *J* 13 Hz + s br d, *Diastereomer A*), +141.5/+139.4 ppm (18%, 2xd, *J* 36 Hz, *Diastereomer B*).

¹H-NMR (CD₂Cl₂): *Diastereomer A*, d 7.53-6.94 (18H, m, 18xHₐᵣ), 4.97 (1H, d, *J* 9.6 Hz, CH-O), 4.59 (1H, dd, *J* 9.6, 2.3 Hz, CH-O), 1.56 (9H, s, C(CH₃)₃), 1.46 (9H, s, C(CH₃)₃), 1.38 (9H, s, C(CH₃)₃), 1.33 (9H, s, C(CH₃)₃), 1.32 (9H, s, C(CH₃)₃), 1.29 (9H, s, C(CH₃)₃), 1.25 (9H, s, C(CH₃)₃), 0.78 (9H, s, C(CH₃)₃); *Diastereomer B*, d 7.57-6.94 (18H, m, 18xHₐᵣ), 4.89 (1H, d, *J* 9.6 Hz, CH-O), 4.63 (1H, dd, *J* 9.6, 1.7 Hz, CH-O), 1.54 (9H, s, C(CH₃)₃), 1.45 (9H, s, C(CH₃)₃), 1.39 (9H, s, C(CH₃)₃), 1.37 (9H, s, C(CH₃)₃), 1.37 (9H, s, C(CH₃)₃), 1.34 (9H, s, C(CH₃)₃), 1.07 (9H, s, C(CH₃)₃), 1.03 (9H, s, C(CH₃)₃).

HRMS (ESI-TOF) [M+H]⁺: *m*/*z* berechnet: für C₇₀H₉₂O₆P₂ 1091.6448, gefunden: 1091.6449.

HRMS (ESI-TOF) [M+Na]⁺: *m*/*z* berechnet: für C₇₀H₉₂O₆P₂ 1113.6262, gefunden: 1113.6276.

| | | | | |
|---|---|---|---|---|
| Elementaranalyse: | berechnet: | C 77.03% | H 8.50% | P 5.68% |
| | gefunden: | C 77.22% | H 8.57% | P 5.50% |

### Di([1,1'-biphenyl]-3-yl) (3,3'-di-tert-butyl-2'-((4,8-di-tert-butyl-2,10-dimethoxydibenzo[d,f][1,3,2]dioxaphosphepin-6-yl)oxy)-5,5'-dimethoxy-[1,1'-biphenyl]-2-yl)phosphit (Verbindung 11)

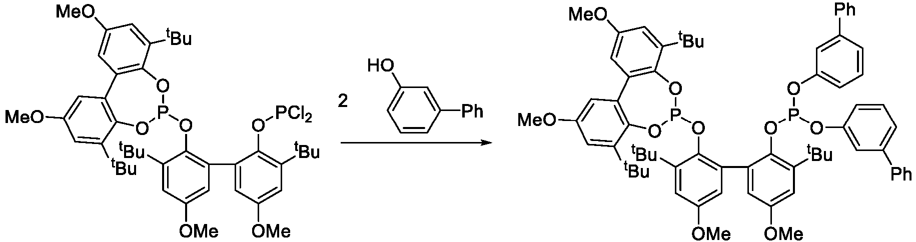

Eine Lösung von [1,1'-Biphenyl]-3-ol (213 mg, 1.25 mmol) und Triethylamin (380 mg, 3.76 mmol) in THF (4 ml) wird bei Raumtemperatur zu einer Lösung des 4,8-Di-*tert*-butyl-6-((3,3'-di-*tert*-butyl-2'-((dichlorophosphanyl)oxy)-5,5'-dimethoxy-[1,1'-biphenyl]-2-yl)oxy)-2,10-dimethoxydibenzo[*d,f*][1,3,2]dioxaphosphepins (529 mg, 0.62 mmol) in THF (5 ml) getropft. Nach dem Rühren über Nacht filtriert man vom ausgefallenen Niederschlag ab und engt das Filtrat unter Vakuum ein. Der verbliebende feste Rückstand wird aus wenig Acetonitril umkristallisiert.

Ausbeute: 380 mg weißer Feststoff (54%).

³¹P-nmr (CD₂Cl₂): d +140.4 ppm (d, *J* 5.8 Hz) und +137.8 ppm (br s).

¹H-nmr (CD₂Cl₂): d 7.53-7.49 (2H, m, 2xHₐᵣ), 746-7.25 (12H, m, 12xHₐᵣ), 7.14 (1H, m, Hₐᵣ), 7.06 (1H, d, *J* 3.2 Hz, Hₐᵣ), 6.95 (1H, d, *J* 3.1 Hz, Hₐᵣ), 6.92 (1H, m, Hₐᵣ), 6.90 (1H, d, *J* 3.1 Hz, Hₐᵣ), 6.86 (1H, m, Hₐᵣ), 6.83 (1H, d, *J* 3.2 Hz, Hₐᵣ), 6.80 (1H, d, *J* 3.2 Hz, Hₐᵣ), 6.76 (1H, m, Hₐᵣ), 6.67 (2H, dd, *J* 3.1, 1.0 Hz, 2xHₐᵣ), 6.50 (1H, d, *J* 3.3 Hz, Hₐᵣ), 3.80 (3H, s, OCH₃), 3.79 (3H, s, OCH₃), 3.77 (3H, s, OCH₃), 3.40 (3H, s, OCH₃), 1.60 (9H, s, C(CH₃)₃), 1.42 (9H, s, C(CH₃)₃), 1.23 (9H, s, C(CH₃)₃), 1.04 (9H, s, C(CH₃)₃). ¹³C-nmr (CD₂Cl₂): d 156.2 (Cₐᵣ-OMe), 156.0 (Cₐᵣ-OMe), 155.7 (Cₐᵣ-OMe), 155.1 (Cₐᵣ-OMe), 152.9-131.5 (18xCₐᵣ), 130.2 (CₐᵣH),130.1 (CₐᵣH), 129.1 (4xCₐᵣH), 128.0 (2xCₐᵣH), 127.4 (2xCₐᵣH), 127.3 (2xCₐᵣH), 122.9 (CₐᵣH), 122.7 (CₐᵣH), 119.9 (d, *J* 8.2 Hz, CₐᵣH), 119.8 (d, *J* 4.1 Hz, CₐᵣH), 119.7 (d, *J* 3.3 Hz, CₐᵣH), 119.5 (d, *J* 7.8 Hz, CₐᵣH), 116.1 (CₐᵣH), 115.3 (d, *J* 4.1 Hz, CₐᵣH), 114.8 (CₐᵣH), 114.6 (CₐᵣH), 114.5 (CₐᵣH), 114.4 (CₐᵣH), 113.3 (CₐᵣH), 113.2 (CₐᵣH), 56.0 (OCH₃), 56.0 (OCH₃), 55.8 (OCH₃), 55.4 (OCH₃), 35.9 (^{t}C), 35.7 (^{t}C), 35.7 (^{t}C), 35.5 (^{t}C), 31.4 (3xCH₃), 31.2 (6xCH₃), 31.1 (d, *J* 3.2 Hz, 3xCH₃).

HRMS (ESI-TOF) [M+H]⁺: *m*/*z* berechnet: für C₆₈H₇₄O₁₀P₂ 1113.4835, gefunden: 1113.4855.

HRMS (ESI-TOF) [M+Na]⁺: *m*/*z* berechnet: für C₆₈H₇₄O₁₀P₂ 1135.4650. gefunden: 1135.4678.

| | | | | |
|---|---|---|---|---|
| Elementaranalyse: | berechnet: | C 73.36% | H 6.70% | P 5.56% |
| | gefunden: | C 73.35% | H 6.68% | P 5.62% |

### Di([1,1'-biphenyl]-2-yl) (3,3'-di-tert-butyl-2'-((4,8-di-tert-butyl-2,10-dimethoxydibenzo[d,f][1,3,2]dioxaphosphepin-6-yl)oxy)-5,5'-dimethoxy-[1,1'-biphenyl]-2-yl) phosphit (Verbindung 12)

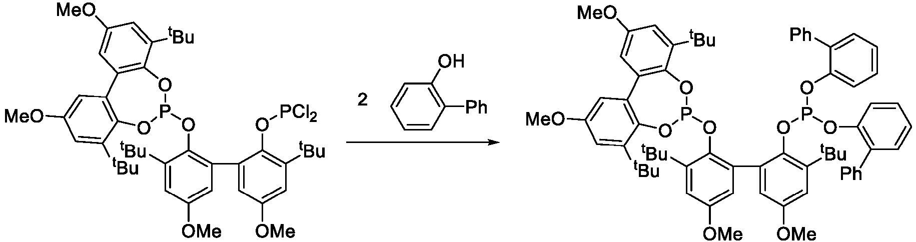

Eine Lösung von [1,1'-Biphenyl]-2-ol (246 mg, 1.44 mmol) und Triethylamin (438 mg, 4.33 mmol) in THF (4 ml) wird bei Raumtemperatur zu einer Lösung des 4,8-Di-*tert*-butyl-6-((3,3'-di-*tert*-butyl-2'-((dichlorophosphanyl)oxy)-5,5'-dimethoxy-[1,1'-biphenyl]-2-yl)oxy)-2,10-dimethoxydibenzo[d,f][1,3,2]dioxaphosphepins (611 mg, 0.72 mmol) in THF (6 ml) getropft. Nach dem Rühren über Nacht filtriert man vom ausgefallenen Niederschlag ab und engt das Filtrat unter Vakuum ein. Der verbliebende feste Rückstand wird durch Säulenchromatographie (Eluent: Dichlormethan) gereinigt.

Ausbeute: 380 mg weißer Feststoff (54%).

³¹P-nmr (CD₂Cl₂): d +140.0 ppm (d, *J* 2.7 Hz) und +138.4 ppm (d, *J* 2.7 Hz).

¹H-nmr (CD₂Cl₂): d 7.38-6.84 (19H, m, 19xCH₃), 6.86 (1H, d, *J* 3.1 Hz, Hₐᵣ), 6.82 (1H, d, *J* 3.2 Hz, Hₐᵣ), 6.63 (2H, m, 2xHₐᵣ), 6.51 (1H, d, *J* 3.1 Hz, Hₐᵣ), 6.30 (1H, m, Hₐᵣ), 6.11 (1H, d, *J* 3.2 Hz, Hₐᵣ), 3.79 (OCH₃), 3.75 (OCH₃), 3.75 (OCH₃), 3.26 (OCH₃), 1.35 (18H, s, 2xC(CH₃)₃), 1.17 (9H, s, C(CH₃)₃), 1.04 (9H, s, C(CH₃)₃).

¹³C-nmr (CD₂Cl₂): d 156.1 (Cₐᵣ-OMe), 155.9 (Cₐᵣ-OMe), 155.4 (Cₐᵣ-OMe), 155.3 (Cₐᵣ-OMe), 149.6 (d, *J* 8.9 Hz, Cₐᵣ), 149.5 (d, *J* 6.5 Hz, Cₐᵣ), 144.3 (m, Cₐᵣ), 144.0 (Cₐᵣ), 143.7 (m, Cₐᵣ), 143.6 (Cₐᵣ), 143.3 (d, *J* 8.1 Hz, Cₐᵣ), 142.9 (d, *J* 2.1 Hz, Cₐᵣ), 142.8 (Cₐᵣ), 141.2 (d, *J* 4.0 Hz, Cₐᵣ), 138.1 (Cₐᵣ), 137.8 (Cₐᵣ), 134.5 (d, *J* 4.5 Hz, Cₐᵣ), 133.7 (d, *J* 3.8 Hz, Cₐᵣ), 133.6 (d, *J* 1.9 Hz, Cₐᵣ), 132.8 (d, *J* 1.6 Hz, Cₐᵣ), 132.7 (m, Cₐᵣ), 131.9 (m, Cₐᵣ), 131.5 (2xCₐᵣH), 130.1 (2xCₐᵣH), 129.5 (2xCₐᵣH), 128.6 (CₐᵣH), 128.3 (CₐᵣH), 128.2 (4xCₐᵣH), 127.3 (CₐᵣH), 126.9 (CₐᵣH), 124.0 (CₐᵣH), 123.5 (CₐᵣH), 120.7 (d, *J* 17.8 Hz, CₐᵣH), 119.2 (d, *J* 20.2 Hz, CₐᵣH), 116.5 (CₐᵣH), 114.6 (2xCₐᵣH), 114.6 (CₐᵣH), 114.4 (CₐᵣH), 113.9 (CₐᵣH), 113.3 (CₐᵣH), 113.2 (CₐᵣH), 56.0 (OCH₃), 55.9 (OCH₃), 55.6 (OCH₃), 55.4 (OCH₃), 35.7 (^{t}C), 35.7 (^{t}C), 35.5 (^{t}C), 35.5 (^{t}C), 31.4 (3xCH₃), 31.3 (3xCH₃), 31.1 (d, *J* 3.6 Hz, 3xCH₃), 30.9 (3xCH₃).

HRMS (ESI-TOF) [M+2O+H]⁺: *m*/*z* berechnet: für C₆₈H₇₄O₁₀P₂ 1145.4734, gefunden: 1145.4725.

HRMS (ESI-TOF) [M+2O+Na]⁺: *m*/*z* berechnet: für C₆₈H₇₄O₁₀P₂ 1167.4548, gefunden: 1167.4534.

| | | | | |
|---|---|---|---|---|
| Elementaranalyse: | berechnet: | C 73.36% | H 6.70% | P 5.56% |
| | gefunden: | C 73.16% | H 6.55% | P 5.58% |

### 2,2'-Bis((4,8-di-tert-butyl-2,10-dimethoxydibenzo[d,f][1,3,2]dioxaphosphepin-6-yl)oxy)-1,1'-biphenyl (Verbindung 13)

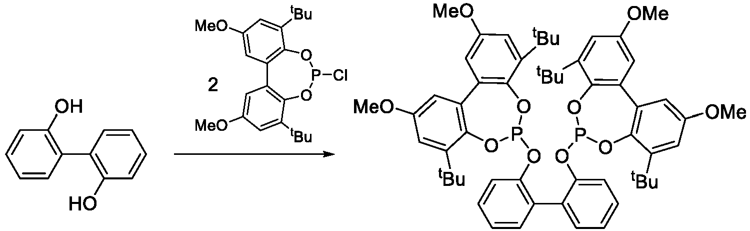

Das 2,2'-Biphenol (110 mg, 0.59 mmol) und Triethylamin (179 mg, 1.77 mmol) in THF (2 ml) wird bei 0 °C mit 4,8-Di-*tert*-butyl-6-chloro-2,10-dimethoxydibenzo[*d,f*][1,3,2]di-oxaphosphepin (499 mg, 1.18 mmol) in THF (5 ml) tropfenweise versetzt. Nach dem Rühren über Nacht wird vom ausgefallenen Niederschlag abfiltriert und das Lösemittel unter Vakuum entfernt. Aus dem verbleibenden Rückstand wird durch Säulenchromatographie (Eluent: Heptan/Dichlormethan 1/3) das Bisphosphit in guter Reinheit (95% im ³¹P-NMR) erhalten.

Ausbeute: 500 mg weißer Feststoff (88%).

³¹P-nmr (CD₂Cl₂): d +135.4 ppm.

¹H-nmr (CD₂Cl₂): ): d 7.30-7.20 (4H, m, 4xHₐᵣ), 7.16 (2H, m, 2xHₐᵣ), 7.00 (2H, m, 2xHₐᵣ), 6.94 (4H, d, *J* 3.0 Hz, 4xHₐᵣ), 6.74 (4H, d, *J* 3.0 Hz, 4xHₐᵣ), 3.84 (12H, s, 4xOCH₃), 1.25 (36H, s, 4xC(CH₃)₃).

¹³C-nmr (CD₂Cl₂): d 156.2 (4xCₐᵣ-OMe), 149.7 (d, *J* 3.4 Hz, 2xCₐᵣ), 143.1 (4xCₐᵣ), 141.9 (d, *J* 6.1 Hz, 2xCₐᵣ), 133.9 (d, *J* 4.1 Hz, 4xCₐᵣ), 132.8 (2xCₐᵣH), 130.2 (d, *J* 2.1 Hz, 4xCₐᵣ), 128.9 (2xCₐᵣH), 123.9 (2xCₐᵣH), 121.4 (d, *J* 12.4 Hz, 2xCₐᵣH), 114.8 (4xCₐᵣH), 113.1 (4xCₐᵣH), 56.0 (4xOCH₃), 35.5 (4x^{t}C), 30.9 (d, *J* 2.5 Hz, 12xCH₃).

HRMS (ESI-TOF) [M+2O+H]⁺: *m*/*z* berechnet: für C₅₆H₆₄O₁₀P₂ 991.3947, gefunden: 991.3959.

HRMS (ESI-TOF) [M+2O+Na]⁺: *m*/*z* berechnet: für C₅₆H₆₄O₁₀P₂ 1013.3765, gefunden: 1013.3776.

### 3,3'-Di-tert-butyl-5,5'-dimethoxy-2'-((4,4,5,5-tetraphenyl-1,3,2-dioxaphospholan-2-yl)oxy)-[1,1'-biphenyl]-2-yl di(pyridin-2-yl) phosphit

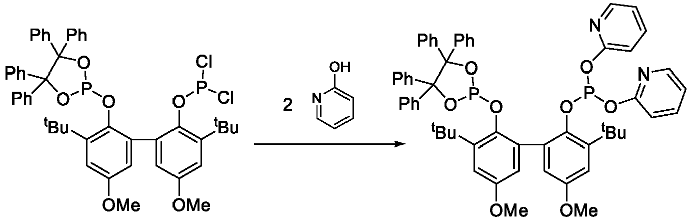

Eine Lösung des 2-((3,3'-Di-*tert*-butyl-2'-((dichlorophosphanyl)oxy)-5,5'-dimethoxy-[1,1'-biphenyl]-2-yl)oxy)-4,4,5,5-tetraphenyl-1,3,2-dioxaphospholans (433 mg, 0.51 mmol) in THF (4 ml) wird bei Raumtemperatur vorgelegt und mit einer Lösung von 2-Hydroxpyridin (106 mg, 1.11 mmol) und Triethylamin (1.03 g, 10.1 mmol) in THF (3 ml) langsam versetzt. Nach dem Rühren über Nacht filtriert man vom ausgefallenen Niederschlag ab und engt das Filtrat unter Vakuum ein. Der verbliebende feste Rückstand wird aus wenig Acetonitril in der Siedehitze umkristallisiert.

Ausbeute: 170 mg (34%), weißer Feststoff.

³¹P-nmr (CD₂Cl₂): d +145.4 ppm (d, *J* 42 Hz) und +134.7 ppm (d, *J* 42 Hz).

¹H-nmr (CD₂Cl₂): d 8.02 (2H, m, 2xHₐᵣ), 7.57 (2H, m, 2xHₐᵣ), 7.37 (2H, m, 2xHₐᵣ), 7.27 (2H, m, 2xHₐᵣ), 7.13-6.90 (20H, m, 20xHₐᵣ), 6.74-6.61 (4H, m, 4xHₐᵣ), 3.65 (3H, s, OCH₃), 3.51 (3H, s, OCH₃), 1.40 (9H, s, C(CH₃)₃), 1.08 (9H, s, C(CH₃)₃).

¹³C-nmr (CD₂Cl₂): 160.8 (d, *J* 4.8 Hz, Cₐᵣ), 160.7 (d, *J* 3.8 Hz, Cₐᵣ), 155.0 (2xCₐᵣ), 147.6 (2xCₐᵣH), 145.5 (m, Cₐᵣ), 144.2 (m, Cₐᵣ), 144.1 (Cₐᵣ), 143.5 (Cₐᵣ), 143.1 (d, *J* 4.1 Hz, Cₐᵣ), 142.6 (2xCₐᵣ), 142.6 (Cₐᵣ), 139.4 (d, *J* 11.4 Hz, 2xCₐᵣH), 133.2 (m, Cₐᵣ), 132.2 (m, Cₐᵣ) 130.6 (2xCₐᵣH), 130.2 (2xCₐᵣH), 129.3 (d, *J* 2.7 Hz, 2xCₐᵣH), 129.1 (d, *J* 4.2 Hz, 2xCₐᵣH), 127.5 (2xCₐᵣH), 127.3 (2xCₐᵣH), 127.3 (d, *J* 2.5 Hz, 2xCₐᵣH), 127.2 (4xCₐᵣH), 127.2 (d, *J* 4.0 Hz, 2xCₐᵣH), 119.0 (d, *J* 8.4 Hz, 2xCₐᵣH), 115.2 (CₐᵣH), 115.1 (d, *J* 4.2 Hz, CₐᵣH), 114.7 (CₐᵣH), 114.5 (d, *J* 6.4 Hz, CₐᵣH), 113.0 (m, 2xCₐᵣH), 95.2 (d, *J* 8.4 Hz, ^{t}C-O), 95.2 (d, *J* 8.5 Hz, ^{t}C-O), 55.8 (OCH₃), 55.5 (OCH₃), 35.6 (^{t}C), 35.1 (^{t}C), 30.7 (3xCH₃), 30.4 (3xCH₃).

| | | | | | |
|---|---|---|---|---|---|
| Elementaranalyse: | berechnet: | C 71.74% | H 5.81% | P 6.38% | N 2.88% |
| | gefunden: | C 70.92% | H 4.86% | P 6.40% | N 2.45% |

### 2'-((6H-Dibenzo[c,e][1,2]oxaphosphinin-6-yl)oxy)-3,3'-di-tert-butyl-5,5'-dimethoxy-[1,1'-biphenyl]-2-yl di(pyridin-2-yl) phosphit

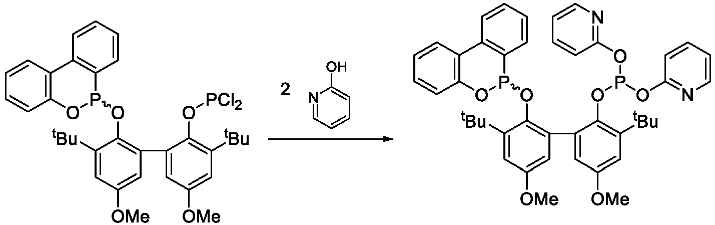

Eine Lösung des 6-((3,3'-Di-*tert*-butyl-2'-((dichlorophosphanyl)oxy)-5,5'-dimethoxy-[1,1'-biphenyl]-2-yl)oxy)-6*H*-dibenzo[*c,e*][1,2]oxaphosphinins (530 mg, 0.81 mmol) in Toluol (7 ml) wird bei Raumtemperatur vorgelegt und mit einer Lösung von 2-Hydroxpyridin (169 mg, 1.78 mmol) und Triethylamin (1.63 g, 16.2 mmol) im Lösemittelgemisch Toluol/THF (2 ml/4 ml) langsam versetzt. Nach dem Rühren über Nacht filtriert man vom ausgefallenen Niederschlag ab und engt das Filtrat unter Vakuum ein. Der verbliebende leicht klebrige Rückstand wird in Heptan durch Rühren über mehrere Stunden zur Kristallisation gebracht. Das Bisphosphit (95% Reinheit im ³¹P-NMR) wurde ohne weitere Reinigung eingesetzt.

Ausbeute: 430 mg (69%), weißer Feststoff.

³¹P-nmr (CD₂Cl₂): d *Diastereomer A* (47%): +134.3 ppm (d, *J* 76 Hz) und +130.2 ppm (d, *J* 76 Hz), *Diastereomer B* (53%): +133.8 ppm (d, *J* 56 Hz) und +125.4 ppm (d, *J* 56 Hz).

¹H-nmr (CD₂Cl₂): *Diastereomerengemisch*; d 8.10-7.90 (8H, m, 8xHₐᵣ), 7.64-6.50 (30H, m, 30xHₐᵣ), 6.25 (1H, dt, *J* 6.7, 2.2 Hz, Hₐᵣ), 6.17 (1H, d, *J* 3.2 Hz, Hₐᵣ), 3.93 (3H, s, OCH₃), 3.65 (3H, s, OCH₃), 3.57 (3H, s, OCH₃), 3.35 (3H, s, OCH₃), 1.55 (9H, s, C(CH₃)₃), 1.39 (9H, s, C(CH₃)₃) 1.10 (9H, s, C(CH₃)₃) 0.88 (9H, s, C(CH₃)₃).

¹³C-nmr (CD₂Cl₂): *Diastereomerengemisch*; d 162-106 ppm (aromatic C-atoms), 56.1 (OCH₃), 55.5 (2xOCH₃), 55.3 (OCH₃), 35.8 (^{t}C), 35.6 (^{t}C), 35.5 (^{t}C), 35.2 (^{t}C), 30.9 (3xCH₃), 30.7 (3xCH₃), 30.7 (3xCH₃), 30.3 (3xCH₃).

### 2,2'-Bis((4,8-di-tert-butyl-2,10-dimethoxydibenzo[d,f][1,3,2]dioxaphosphepin-6-yl)oxy)-1,1'-biphenyl

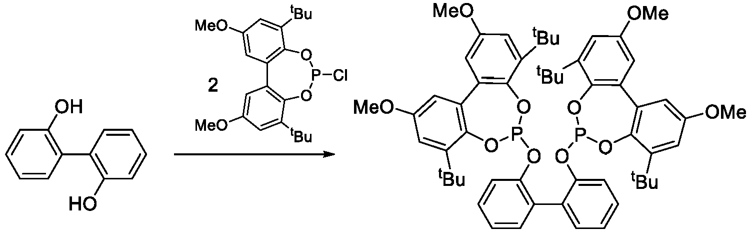

Das 2,2'-Biphenol (110 mg, 0.59 mmol) und Triethylamin (179 mg, 1.77 mmol) in THF (2 ml) wird bei 0°C mit 4,8-Di-*tert*-butyl-6-chloro-2,10-dimethoxydibenzo[*d,f*][1,3,2]di-oxaphosphepin (499 mg, 1.18 mmol) in THF (5 ml) tropfenweise versetzt. Nach dem Rühren über Nacht wird vom ausgefallenen Niederschlag abfiltriert und das Lösemittel unter Vakuum entfernt. Aus dem verbleibenden Rückstand wird durch Säulenchromatographie (Eluent: Heptan/Dichlormethan 1/3) das Bisphosphit in guter Reinheit (95% im ³¹P-NMR) erhalten.

Ausbeute: 500 mg (88%), weißer Feststoff.

³¹P-nmr (CD₂Cl₂): d +135.4 ppm.

¹H-nmr (CD₂Cl₂): ): d 7.30-7.20 (4H, m, 4xHₐᵣ), 7.16 (2H, m, 2xHₐᵣ), 7.00 (2H, m, 2xHₐᵣ), 6.94 (4H, d, *J* 3.0 Hz, 4xHₐᵣ), 6.74 (4H, d, *J* 3.0 Hz, 4xHₐᵣ), 3.84 (12H, s, 4xOCH₃), 1.25 (36H, s, 4xC(CH₃)₃).

¹³C-nmr (CD₂Cl₂): d 156.2 (4xCₐᵣ-OMe), 149.7 (d, *J* 3.4 Hz, 2xCₐᵣ), 143.1 (4xCₐᵣ), 141.9 (d, *J* 6.1 Hz, 2xCₐᵣ), 133.9 (d, *J* 4.1 Hz, 4xCₐᵣ), 132.8 (2xCₐᵣH), 130.2 (d, *J* 2.1 Hz, 4xCₐᵣ), 128.9 (2xCₐᵣH), 123.9 (2xCₐᵣH), 121.4 (d, *J* 12.4 Hz, 2xCₐᵣH), 114.8 (4xCₐᵣH), 113.1 (4xCₐᵣH), 56.0 (4xOCH₃), 35.5 (4x^{t}C), 30.9 (d, *J* 2.5 Hz, 12xCH₃).

HRMS (ESI-TOF) [M+2O+H]⁺: *m*/*z* berechnet: für C₅₆H₆₄O₁₀P₂ 991.3947, gefunden: 991.3959.

HRMS (ESI-TOF) [M+2O+Na]⁺: *m*/*z* berechnet: für C₅₆H₆₄O₁₀P₂ 1013.3765, gefunden: 1013.3776.

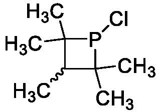

**Die Darstellung des** 1-Chlor-2,2,3,4,4-pentamethylphosphetans erfolgte nach Literatur (A. Marinetti, L. Ricard Tetrahedron 1993, 49, 10291-10304).

³¹P-NMR (CD₂Cl₂): d +170.9 ppm (71%, *trans*) und +150.5 ppm (29%, *cis*).

¹H-NMR (CD₂Cl₂): *trans-Isomer,* d 2.82 (1H, dq, *J* 7.3, 1.4 Hz, CH), 1.25 (6H, d, *J* 21.4 Hz, 2xCH₃), 1.16 (6H, d, *J* 7.7 Hz, 2xCH₃), 0.78 (1H, dd, *J* 7.2, 0.5 Hz, CH₃); *cis-Isomer*, d 2.17 (1H, dq, *J* 7.3, 2.4 Hz, CH); 1.23 (6 H, d, *J* 26.5 Hz, 2xCH₃), 1.21 (6 H, s, 2xCH₃), 0.90 (1H, dd, *J* 7.2, 1.0 Hz, CH₃).

¹³C-NMR (CD₂Cl₂): *trans-Isomer,* d 52.2 (d, *J* 3.0 Hz, CH), 32.6 (d, *J* 7.8 Hz,2x^{t}C), 25.8 (2xCH₃), 22.6 (CH₃), 22.2 (CH₃), 9.7 (CH₃); *cis-Isomer*, d 48.5 (d, *J* 7.5 Hz, CH), 36.2 (d, *J* 10.6 Hz, 2x^{t}C), 30.3 (CH₃), 30.0 (CH₃), 20.0 (2xCH₃), 9.7 (d, *J* 8.8 Hz, CH₃).

### 1,1'-((3,3',5,5'-Tetra-tert-butyl-[1,1'-biphenyl]-2,2'-diyl)bis(oxy))bis(2,2,3,4,4-pentamethylphosphetan)

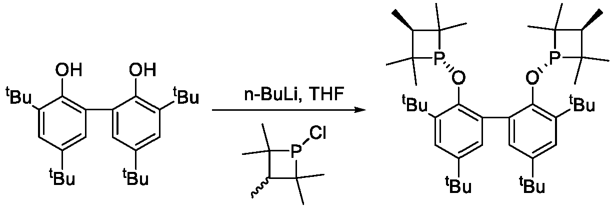

Eine Lösung von 3,3',5,5'-Tetra-*tert*-butyl-[1,1'-biphenyl]-2,2'-diol (528 mg, 1.29 mmol) in THF (12 ml) wurde unter Rühren auf -20 °C abgekühlt und mit einer Lösung von n-Butyllithium in Hexan (1.6 M, 2.58 mmol, 1.61 ml) langsam tropfenweise versetzt. Anschließend rührt man bei Raumtemperatur eine halbe Stunde weiter und überführt dieses Gemisch langsam zu einer Lösung von 1-Chloro-2,2,3,4,4-pentamethylphosphetan (460 mg, 2.58 mmol) in THF (3 ml) bei 0 °C (Eisbad). Die Reaktionsmischung wird über Nacht bei Raumtemperatur weiter gerührt und das Gemisch unter anaeroben Bedingungen filtriert. Nach dem Entfernen des Lösemittels unter Vakuum wird der verbleibende Rückstand aus heißem Acetonitril umkristallisiert. Nach der Abtrennung und dem Trocknen unter Vakuum wird das Bisphosphit als weißer Feststoff erhalten.

Ausbeute: 480 mg weißer Feststoff (54%).

³¹P-NMR (CD₂Cl₂): d +173.9 ppm (*all-trans*).

¹H-NMR (CD₂Cl₂): d 7.35 (2H, d, *J* 2.3 Hz, 2xHₐᵣ), 6.95 (2H, dd, *J* 2.3, 2.4 Hz, 2xHₐᵣ), 1.44 (2H, m, 2xCH), 1.43 (18H, s, 2xC(CH₃)₃), 1.32 (6H, d, *J* 5.0 Hz, 2xCH₃), 1.28 (18H, s, 2xC(CH₃)₃), 1.08 (6H, d, *J* 5.7 Hz, 2xCH₃), 1.01 (6H, d, *J* 17.8 Hz, 2xCH₃), 0.72 (6H, dd, *J* 7.2, 1.0 Hz, 2xCH₃), 0.15 (6H, d, *J* 17.9 Hz, 2xCH₃).

¹³C-NMR (CD₂Cl₂): d 154.0 (t, *J* 2.1 Hz, 2xCₐᵣ-O), 143.5 (2xCₐᵣ), 140.4 (2xCₐᵣ), 133.6 (t, *J* 2.1 Hz, 2xCₐᵣ), 132.6 (2xCₐᵣH), 124.9 (2xCₐᵣH), 43.8 (d, *J* 11.4 Hz, 2xCH), 41.7 (d, *J* 12.4, 2x ^{t}CP), 41.6 (2x ^{t}CP), 35.9 (2x^{t}C), 34.6 (2x^{t}C), 31.7 (6xCH₃), 31.4 (6xCH₃), 29.7 (d, *J* 29.0 Hz, 2xCH₃), 28.0 (d, *J* 27.3 Hz, 2xCH₃), 20.7 (2xCH₃), 18.4 (2xCH₃), 7.5 (d, *J* 12.3 Hz, 2xCH₃).

HRMS (ESI-TOF) [M+H]⁺: *m*/*z* berechnet: für C₄₄H₇₂O₂P₂ 695.5085, gefunden: 695.5086.

| | | | | |
|---|---|---|---|---|
| Elementaranalyse: | berechnet: | C 76.04% | H 10.44% | P 8.91% |
| | gefunden: | C 76.08% | H 10.48% | P 8.86% |

### 1,1'-((3,3'-Di-tert-butyl-5,5'-dimethoxy-[1,1'-biphenyl]-2,2'-diyl)bis(oxy))bis(2,2,3,4,4-pentamethylphosphetan)

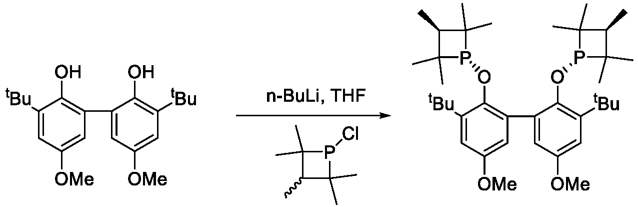

Das Bisphosphit wird in ähnlicher Weise wie oben beschrieben hergestellt. Zunächst wird 3,3'-Di-*tert-*butyl-5,5'-dimethoxy-[1,1'-biphenyl]-2,2'-diol (293 mg, 0.82 mmol) in THF (5 ml) bei -20 °C langsam mit einer Lösung von *n*-Buthyllithium in Hexan (1.6 M, 1.80 mmol, 1.13 ml) versetzt und anschließend bei Raumtemperatur etwa eine halbe Stunde weiter gerührt. Diese Mischung gibt man dann allmählich zu einer auf 0°C abgekühlten Lösung von 1-Chlor-2,2,3,4,4-pentamethylphosphetan (322 mg, 1.80 mmol) in THF (4 ml). Anschließend lässt man über Nacht bei Raumtemperatur weiter rühren. Zur Aufarbeitung wird die Lösung nach Zugabe von trocknem Toluol (9 ml) unter anaeroben Bedingungen (Kieselgur, G4-Fritte) filtriert und unter Vakuum die Lösemittel entfernt. Der Rückstand wird anschließend einmal mit Acetonitril (7 ml) gewaschen und nach dem Abtrennen wird das Produkt unter Vakuum getrocknet.

Ausbeute: 397 mg weißer Feststoff (75%).

³¹P-NMR (CD₂Cl₂): d +174.5 ppm (*all-trans*).

¹H-NMR (CD₂Cl₂): d 6.88 (2H, d, *J* 3.3 Hz, 2xHₐᵣ), 6.52 (2H, dd, *J* 3.3, 2.0 Hz, 2xHₐᵣ), 3.73 (6H, s, 2xOCH₃), 1.49 (2H, dq, *J* 7.0*.* 3.4 Hz, 2xCH), 1.41 (18H, s, 2xC(CH₃)₃), 1.28 (6H, d, *J* 5.0 Hz, 2xCH₃), 1.06 (6H, d, *J* 5.6 Hz, 2xCH₃), 1.00 (6H, d, *J* 17.7 Hz, 2xCH₃), 0.73 (6H, dd, *J* 7.2, 0.5 Hz, 2xCH₃), 0.33 (6H, d, *J* 17.6 Hz, 2xCH₃).

¹³C-NMR (CD₂Cl₂): d 153.5 (2xCₐᵣ-OMe), 150.2 (m, 2xCₐᵣ-O), 143.0 (2xCₐᵣC), 134.3 (m, 2xCₐᵣC), 117.9 (2xCₐᵣH), 115.0 (2xCₐᵣH), 55.9 (2xOCH₃), 43.5 (m, 2xCH), 41.8 (m, 2x^{t}CP), 41.6 (d, *J* 3.5 Hz, 2x ^{t}CP), 35.8 (2x^{t}C), 31.1 (6xCH₃), 29.5 (d, *J* 29.0 Hz, CH₃), 27.8 (d, *J* 28.1 Hz, CH₃), 20.3 (CH₃), 18.4 (CH₃), 7.4 (m, CH₃).

HRMS (ESI-TOF) [M+H]⁺: *m*/*z* berechnet: für C₃₈H₆₀O₄P₂ 643.4045, gefunden: 643.4045.

| | | | | |
|---|---|---|---|---|
| Elementaranalyse: | berechnet: | C 71.00% | H 9.41% | P 9.64% |
| | gefunden: | C 70.53% | H 9.62% | P 8.60% |

### 3,3'-di-tert-butyl-5,5'-dimethoxy-2'-(((1r,3r)-2,2,3,4,4-pentamethylphosphetan-1-yl)oxy)-[1,1'-biphenyl]-2-ol

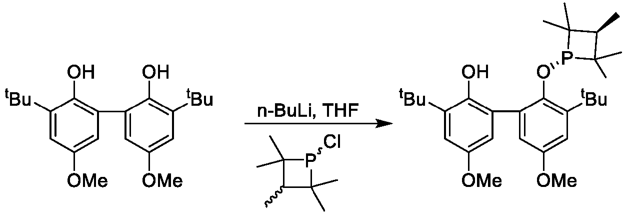

Zu einer Lösung von 3,3'-Di-*tert*.-butyl-5,5'-dimethoxy-[1,1'-biphenyl]-2,2'-diol (1.38 g, 3.84 mmol) in trocknem THF (25 ml) gibt man bei -20°C langsam eine n-Butyllithium-Lösung in Hexan (0.53 M, 7.20 ml). Anschließend versetzt man diese Reaktionsmischung mit einer Lösung von 1-Chlor-2,2,3,4,4-pentamethylphosphetan (686 g, 3.84 mmol) in THF (4 ml) und rührt über Nacht bei Raumtemperatur weiter. Zur Aufarbeitung wird das Lösemittel unter Vakuum entfernt, der Rückstand mit Toluol (40 ml) aufgenommen und durch eine G4-Fritte unter anaeroben Bedingungen filtriert. Nach dem Entfernen des Lösemittels und Trocknen im Vakuum wurde das Produkt mit einer Reinheit von 95% (³¹P-NMR) erhalten.

Ausbeute: 1.02 g weißer Feststoff (53%).

³¹P-NMR (THF-d₈): d +176.9 ppm (*trans*-Monophosphetan).

¹H-NMR (THF-d₈): d 6.88 (1H, d, *J* 3.3 Hz, Hₐᵣ), 6.81 (1H, d, *J* 3.1 Hz, Hₐᵣ), 6.49 (1H, d, *J* 3.1 Hz, Hₐᵣ), 6.41 (1H, d, *J* 3.2 Hz, Hₐᵣ), 6.27 (1H, br s, OH), 3.68 (OCH₃), 3.68 (OCH₃), 1.48 (1H, m, CH), 1.44 (9H, s, 3xCH₃), 1.41 (9H, s, 3xCH₃), 1.24 (3H, d, *J* 5.3 Hz, CH₃), 1.18 (3H, d, *J* 5.3 Hz, CH₃), 0.82 (3H, d, *J* 17.8 Hz, CH₃), 0.75 (3H, dd, *J* 7.1, 1.0 Hz, CH₃), 0.57 (3H, d, *J* 18.3 Hz, CH₃).

¹³C-NMR (THF-d₈): d 155.5 (Cₐᵣ-OMe), 153.0 (Cₐᵣ-OMe), 151.4 (d, J 6.4 Hz, Cₐᵣ), 147.9 (Cₐᵣ), 143.4 (d, *J* 2.2 Hz, Cₐᵣ), 138.3 (Cₐᵣ), 132.8 (d, *J* 7.3 Hz, Cₐᵣ), 128.1 (Cₐᵣ), 115.6 (CₐᵣH), 114.8 (CₐᵣH), 114.7 (CₐᵣH), 114.5 (CₐᵣH), 55.4 (OCH₃), 55.4 (OCH₃), 43.5 (d, *J* 11.6 Hz, CH), 41.9 (d, *J* 7.1 Hz, ^{t}CP), 41.7 (d, *J* 6.3 Hz, ^{t}CP), 35.9 (^{t}C), 35.6 (^{t}C), 30.9 (3xCH₃), 30.0 (3xCH₃), 29.1 (d, *J* 13.7 Hz, CH₃), 28.9 (d, *J* 14.1 Hz, CH₃), 19.5 (d, *J* 2.4 Hz, CH₃), 18.6 (d, *J* 2.7 Hz, CH₃), 7.3 (d, *J* 12.6 Hz, CH₃).

### 1-((3,3'-di-tert-butyl-2'-((dicyclohexylphosphaneyl)oxy)-5,5'-dimethoxy-[1,1'-biphenyl]-2-yl)oxy)-2,2,3,4,4-pentamethylphosphetan

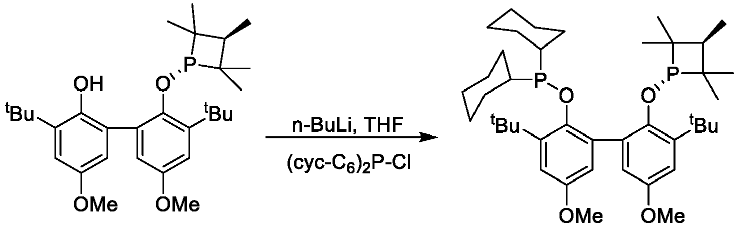

Zu einer Lösung von 3,3'-Di-*tert*-butyl-5,5'-dimethoxy-2'-(((1r,3r)-2,2,3,4,4-pentamethylphosphetan-1-yl)oxy)-[1,1'-biphenyl]-2-ol (319 mg, 0.64 mmol) in THF (6 ml) gibt man bei -20 °C langsam eine n-Butyllithium-Lösung in Hexan (0.53 M, 1.20 ml) und lässt auf Raumtemperatur erwärmen. Anschließend versetzt man diese Reaktionsmischung bei 0°C mit einer Lösung des Chlordicyclohexyl-phosphins (149 mg, 0.64 mmol) in THF (4 ml) und lässt über Nacht bei Raumtemperatur rühren. Das Lösemittel wird unter Vakuum entfernt und der Rückstand mit Toluol (8 ml) aufgenommen. Die unlöslichen Bestandteile werden abfiltriert und das Filtrat anschließend erneut unter Vakuum eingeengt. Der viskose Rückstand wird mit Dichlormethan (3 ml) aufgenommen und erneut unter reduziertem Druck die Lösemittel entfernt. Der erhaltene Feststoff wird anschließend mit Acetonitril (7 ml) bis zur Siedehitze erwärmt . Nach dem Abkühlen wird das Produkt abfiltriert und getrocknet.

Ausbeute: 288 mg weißer Feststoff (65%).

³¹P-NMR (CD₂Cl₂): d +174.6 ppm und +149.3 ppm (2xd, *J* 7.9 Hz).

¹H-NMR (CD₂Cl₂): d 6.88 (2H, m, 2xHₐᵣ), 6.56 (1H, dd, *J* 3.3, 1.0 Hz, Hₐᵣ), 6.56 (d, *J* 3.3 Hz, Hₐᵣ), 3.73 (3H, s, OCH₃), 3.73 (3H, s, OCH₃), 1.98-1.50 (12H, m, 6xCH₂), 1.51 (2H, m, 2xCH-P), 1.43 (H, m, CH), 1.43 (9H, s, C(CH₃)₃), 1.41 (9H, s, C(CH₃)₃), 1.31 (3H, d, *J* 5.4 Hz, CH₃), 1.28-1.02 (8H, m, 4xCH₂), 0.97 (3H, d, *J* 17.7 Hz, CH₃), 0.94 (3H, d, *J* 5.6 Hz, CH₃), 0.74 (3H, dd, *J* 7.1, 0.8 Hz, CH₃), 0.54 (3H, d, *J* 17.8 Hz, CH₃).

¹³C-NMR (CD₂Cl₂): d 154.1 (Cₐᵣ-OMe), 152.4 (Cₐᵣ-OMe), 151.6 (m, Cₐᵣ), 149.2 (d, *J* 1.9 Hz, Cₐᵣ), 142.9 (d, *J* 2.5 Hz, Cₐᵣ), 141.2 (Cₐᵣ), 136.0 (m, Cₐᵣ), 129.3 (d, *J* 2.4 Hz, Cₐᵣ), 116.4 (d, *J* 2.8 Hz, CₐᵣH), 115.9 (d, *J* 3.7 Hz, CₐᵣH), 115.2 (CₐᵣH), 113.9 (CₐᵣH), 55.7 (OCH₃), 55.7 (OCH₃), 43.4 (d, *J* 11.2 Hz, CHMe), 42.1 (d, *J* 7.2 Hz, ^{t}CP), 42.0 (d, *J* 6.1 Hz, ^{t}CP), 40.1 (d, *J* 25.2 Hz, CH-P), 39.7 (d, *J* 29.7 Hz, CH-P), 36.0 (^{t}C), 35.6 (^{t}C), 31.2 (3xCH₃), 30.9 (3xCH₃), 29.4 (d, *J* 27.5 Hz, CH₃), 29.3 (d, *J* 14.3 Hz, CH₂), 28.6 (d, *J* 15.6 Hz, CH₂), 28.4 (d, *J* 26.9 Hz, CH₃), 27.9 (d, *J* 13.2 Hz, CH₂), 27.8 (d, *J* 9.6 Hz, CH₂), 27.4-27.1 (m, 4xCH₂), 27.1 (CH₂), 27.0 (d, *J* 9.5 Hz, CH₂), 19.9 (d, *J* 2.9 Hz, CH₃), 18.9 (d, *J* 2.5 Hz, CH₃), 7.4 (d, *J* 11.7 Hz, CH₃);

HRMS (ESI-TOF) [M+H]⁺: *m*/*z* berechnet: für C₄₂H₆₆O₄P₂ 697.4514, gefunden: 697.4517.

| | | | | |
|---|---|---|---|---|
| Elementaranalyse: | berechnet: | C 72.38% | H 9.55% | P 8.89% |
| | gefunden: | C 72.08% | H 9.20% | P 8.65% |

### 4,8-Di-tert-butyl-6-((3,3'-di-tert-butyl-5,5'-dimethoxy-2'-(((1r,3r)-2,2,3,4,4-pentamethylphosphetan-1-yl)oxy)-[1,1'-biphenyl]-2-yl)oxy)-2,10-dimethoxydibenzo[d,f][1,3,2]dioxaphosphepin

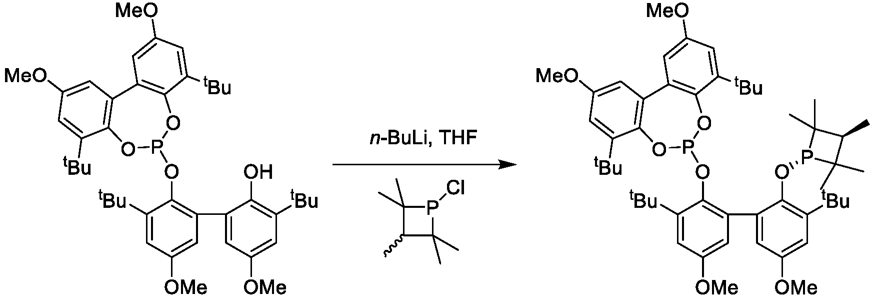

Zu einer Lösung von 3,3'-Di-*tert*-butyl-2'-((4,8-di-*tert*-butyl-2,10-dimethoxydibenzo[*d,f*][1,3,2]dioxaphosphepin-6-yl)oxy)-5,5'-dimethoxy-[1,1'-biphenyl]-2-ol (600 mg, 0.81 mmol) in THF (6 ml) gibt man bei - 20 °C langsam eine *n*-Butyllithium-Lösung in Hexan (0.53 M, 0.84 mmol, 1.58 ml) und lässt auf Raumtemperatur erwärmen. Anschließend versetzt man diese Reaktionsmischung mit einer Lösung des 1-Chlor-2,2,3,4,4-pentamethylphosphetans (150 mg, 0.84 mmol) in THF (3 ml) und lässt über Nacht bei Raumtemperatur rühren. Das Lösemittel wird unter Vakuum entfernt und der Rückstand mit Toluol (12 ml) aufgenommen. Die unlöslichen Bestandteile werden abfiltriert und das Filtrat anschließend erneut unter Vakuum eingeengt. Der erhaltene Feststoff wird anschließend mit Acetonitril (6 ml) bis zur Siedehitze erwärmt, nach dem Abkühlen das Produkt abfiltriert und bei 60°C getrocknet.

Ausbeute: 490 mg weißer Feststoff (87%).

³¹P-NMR (CD₂Cl₂): d +181.8 ppm und +141.1 (2xbr s).

¹H-NMR (CD₂Cl₂): d 6.94 (1H, d, *J* 3.2 Hz, Hₐᵣ), 6.91 (2H, m, 2xHₐᵣ), 6.88 (1H, d, *J* 3.1 Hz, Hₐᵣ), 6.78 (1H, dd, *J* 3.2, 0.8 Hz, Hₐᵣ), 6.66 (2H, d, *J* 3.1 Hz, Hₐᵣ), 6.64 (1H, d, *J* 3.2 Hz, Hₐᵣ), 6.63 (1H, d, *J* 3.3 Hz, Hₐᵣ), 3.79 (3H, s, OCH₃), 3.78 (3H, s, OCH₃), 3.77 (3H, s, OCH₃), 3.76 (3H, s, OCH₃), 1.51 (1H, m, CH), 1.45 (9H, s, C(CH₃)₃), 1.43 (9H, s, C(CH₃)₃), 1.41 (3H, d, *J* 5.2 Hz, CH₃), 1.23 (9H, s, C(CH₃)₃), 1.12 (3H, d, *J* 17.7 Hz, CH₃), 1.08 (9H, s, C(CH₃)₃), 0.89 (3H, d, *J* 5.7 Hz, CH₃), 0.77 (3H, dd, *J* 7.0. 0.7 Hz, CH₃), 0.43 (3H, d, *J* 17.9 Hz, CH₃).

¹³C-NMR (CD₂Cl₂): d 156.0 (Cₐᵣ-OMe) 156.0 (Cₐᵣ-OMe), 154.9 (Cₐᵣ-OMe) 154.7 (Cₐᵣ-OMe), 151.4 (m, Cₐᵣ), 144-132 ppm verschiedene Signale, 118.4 (CₐᵣH), 116.2 (CₐᵣH), 115.6 (CₐᵣH), 114.5 (d, *J* 3.0 Hz, 2xCₐᵣH), 113.4 (CₐᵣH), 113.2 (d, *J* 20.4 Hz, 2xCₐᵣH), 56.0 (OCH₃), 56.0 (OCH₃), 55.8 (2xOCH₃), 43.4 (d, *J* 10.7 Hz, CH), 42.5 (d, *J* 7.9 Hz, ^{t}C), 41.9 (d, *J* 5.8 Hz, ^{t}C), 36.0 (^{t}C), 35.8 (^{t}C), 35.7 (^{t}C), 35.7 (^{t}C), 31.5 (3xCH₃), 31.3 (6xCH₃), 31.3 (d, *J* 2.8 Hz, 3xCH₃), 29.7 (d, *J* 27.1 Hz, CH₃), 28.2 (d, *J* 26.7 Hz, CH₃), 20.2 (d, *J* 2.7 Hz, CH₃), 18.6 (d, *J* 1.8 Hz, CH₃), 7.4 (d, *J* 12.2 Hz, CH₃).

HRMS (ESI-TOF) [M+H]⁺: *m*/*z* berechnet: für C₅₂H₇₂O₈P₂ 887.4780. gefunden: 887.4772.

| | | | | |
|---|---|---|---|---|
| Elementaranalyse: | berechnet: | C 70.41% | H 8.18% | P 6.98% |
| | gefunden: | C 70.43% | H 8.04% | P 6.80% |

### (3aR,3a'R,8aR,8a'R)-6,6'-((3,3'-Di-tert-butyl-5,5'-dimethoxy-[1,1'-biphenyl]-2,2'-diyl)bis(oxy))bis(2,2-dimethyl-4,4,8,8-tetraphenyltetrahydro-[1,3]dioxolo[4,5-e][1,3,2]dioxaphosphepin) (Verbindung 14)

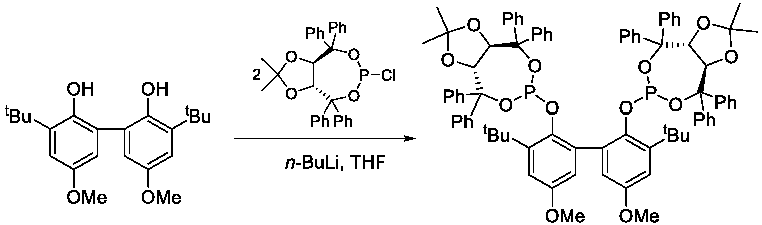

Eine Lösung des 3,3'-Di-*tert*-butyl-5,5'-dimethoxy-[1,1'-biphenyl]-2,2'-diols (134 mg, 0.37 mmol) in THF (2 ml) wird auf -20 °C abgekühlt und langsam mit einer Lösung von n-Butyllithium in Hexan (0.53 M, 1.41 ml, 0.75 mmol) versetzt. Nach etwa 20 Minuten gibt man zur Reaktionsmischung bei 0 °C eine Lösung des (3a*R*,8a*R*)-6-chloro-2,2-dimethyl-4,4,8,8-tetraphenyltetrahydro-[1,3]dioxolo[4,5-*e*][1,3,2]-dioxaphosphepins (418 mg, 0.79 mmol) in THF (4 ml) hinzu. Nach dem Rühren über Nacht bei Raumtemperatur wird das Lösemittel unter Vakuum entfernt und der Rückstand mit Toluol (7 ml) aufgenommen. Nach Filtration und Entfernen des Lösemittels wird der feste Rückstand unter Vakuum bei 60°C getrocknet. Zur Reinigung wird das Rohprodukt in heißem Acetonitril gerührt und nach dem Abkühlen das Bisphosphit abfiltriert.

Ausbeute: 305 mg weißer Feststoff (61%).

³¹P-NMR (CD₂Cl₂): d +146.6 ppm (6%, *Diastereomer A*) und +141.63ppm (94%, *Diastereomer B*)*.*

¹H-NMR (CD₂Cl₂): *Diastereomer B*, d 7.57 (4H, m, 4xHₐᵣ), 7.44 (4H, m, 4xHₐᵣ), 7.31-7.02 (28H, m, 28xHₐᵣ), 6.95 (4H, m, 4xHₐᵣ), 6.86 (2H, d, *J* 3.2 Hz, 2xHₐᵣ), 6.60 (2H, d, *J* 3.2 Hz, 2xHₐᵣ), 5.00 (2H, d, *J* 7.9 Hz, 2xCH-O), 4.75 (2H, dd, *J* 7.9, 2.1 Hz, 2xCH-O), 3.45 (6H, s, 2xOCH₃), 1.03 (18H, s, 2xC(CH₃)₃), 0.66 (6H, s, 2xCH₃), 0.53 (6H, s, 2xCH₃).

¹³C-NMR (CD₂Cl₂): *Diastereomer B*, d 154.7 (2xCₐᵣ-OMe), 146.5 (2xCₐᵣ), 146.4 (2xCₐᵣ), 143.1 (2xCₐᵣ), 141.6 (d, *J* 3.9 Hz, 2xCₐᵣ), 141.4 (2xCₐᵣ), 131.3 (m, 2xCₐᵣ), 129.6 (d, *J* 6.7 Hz, 4xCₐᵣH), 129.3 (4xCₐᵣH), 128.7 (4xCₐᵣH), 128.2-127.3 (24xCₐᵣH), 127.0 (4xCₐᵣH), 114.9 (2xCₐᵣH), 113.9 (2xCₐᵣH), 113.8 (2x^{t}CMe₂), 88.5 (d, *J* 15.4 Hz, 2x^{t}CO), 82.5 (d, *J* 19.9 Hz, 2xCHO), 82.2 (d, *J* 7.4 Hz, 2x^{t}CO), 81.2 (d, *J* 4.9 Hz, 2xCHO), 55.5 (2xCH₃O), 35.4 (2x^{t}C), 30.0 (6xCH₃), 27.0 (CH₃), 26.8 (CH₃).

HRMS (ESI-TOF) [M+H]⁺: *m*/*z* berechnet: für C₈₄H₈₄O₁₂P₂ 1347.5516, gefunden1347.5508.

HRMS (ESI-TOF) [M+Na]⁺: *m*/*z* berechnet: für C₈₄H₈₄O₁₂P₂ 1369.5331, gefunden1369.5328.

| | | | | |
|---|---|---|---|---|
| Elementaranalyse: | berechnet: | C 74.87% | H 6.28% | P 4.60% |
| | gefunden: | C 74.75% | H 6.37% | P 4.65% |

### 3,3'-Di-tert-butyl-2'-(((3aR,8aR)-2,2-dimethyl-4,4,8,8-tetraphenyltetrahydro-[1,3]dioxolo[4,5-e][1,3,2]-dioxaphosphepin-6-yl)oxy)-5,5'-dimethoxy-[1,1'-biphenyl]-2-ol

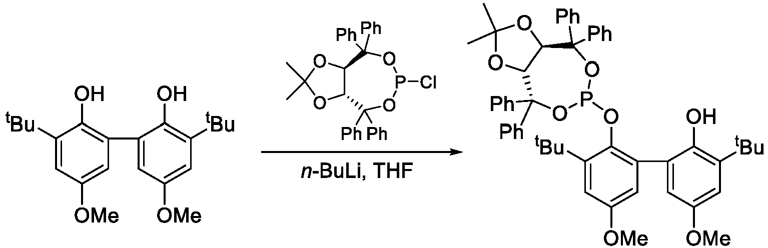

Eine Lösung des 3,3'-Di-*tert*-butyl-5,5'-dimethoxy-[1,1'-biphenyl]-2,2'-diols (753 mg, 2.10 mmol) in THF (15 ml) wird auf -20 °C abgekühlt und langsam mit einer Lösung von *n*-Butyllithium in Hexan (1.6 M, 1.31 ml, 2.10 mmol) versetzt. Nach etwa 20 Minuten wird die Reaktionsmischung bei Raumtemperatur mit einer Lösung des (3a*R*,8a*R*)-6-chloro-2,2-dimethyl-4,4,8,8-tetraphenyltetrahydro-[1,3]dioxolo[4,5-e][1,3,2]-dioxaphosphepins (1.12 g, 2.10 mmol) in THF (9 ml) versetzt. Nach dem Rühren über Nacht bei Raumtemperatur wird das Lösemittel unter Vakuum entfernt und der verbleibende Feststoff mit Toluol (15 ml) aufgenommen. Nach Filtration und Entfernen des Lösemittels wird der feste Rückstand unter Vakuum bei 60°C getrocknet. Das Produkt fällt durch die axiale Chiralität als Diastereomerengemisch an. Eine weitere Reinigung war nicht erforderlich.

Ausbeute: 1.10 g weißer Feststoff (61%).

³¹P-NMR (CD₂Cl₂): d +147.4 ppm (26%, *Diastereomer A*) und +145.2 ppm (74%, *Diastereomer B*) ¹H-NMR (CD₂Cl₂): *Diastereomer A,* d 7.45-6.38 (24H, m, 24xHₐᵣ), 5.29 (1H, br s, OH), 5.05 (1H, d, *J* 8.3 Hz, CH-O), 4.91 (1H, d, *J* 8.3 Hz, CH-O), 3.70 (3H, s, OCH₃), 3.55 (3H, s, OCH₃), 1.52 (9H, s, C(CH₃)₃), 1.21 (9H, s, C(CH₃)₃), 1.01 (3H, s, CH₃), 0.38 (3H, s, CH₃). *Diastereomer B*, d 7.45-6.38 (24H, m, 24xHₐᵣ), 5.17 (1H, d, J 8.2 Hz, CH-O), 4.91 (1H, dd, *J* 8.2, 1.7 Hz, CH-O), 4.66 (1H, br s, OH), 3.78 (3H, s, OCH₃), 3.49 (3H, s, OCH₃), 1.42 (9H, s, C(CH₃)₃), 1.23 (9H, s, C(CH₃)₃), 0.83 (3H, s, CH₃), 0.43 (3H, s, CH₃).

| | | | | |
|---|---|---|---|---|
| Elementaranalyse: | berechnet: | C 74.63% | H 6.74% | P 3.63% |
| | gefunden: | C 74.77% | H 6.99% | P 3.47% |

### (3aR,8aR)-6-((3,3'-Di-tert-butyl-2'-(((4R,5R)-4,5-diphenyl-1,3,2-dioxaphospholan-2-yl)oxy)-5,5'-dimethoxy-[1,1'-biphenyl]-2-yl)oxy)-2,2-dimethyl-4,4,8,8-tetraphenyltetrahydro-[1,3]dioxolo[4,5-e][1,3,2]dioxaphosphepin (Verbindung 15)

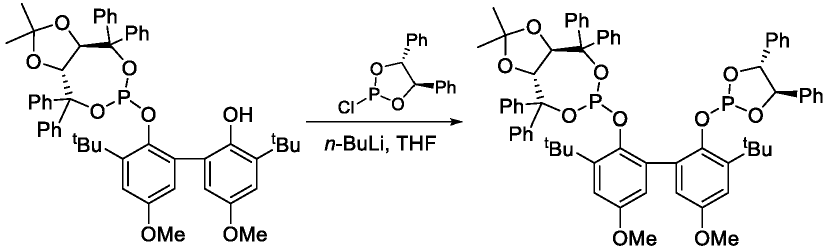

Eine Lösung des 3,3'-Di-*tert*-butyl-2'-(((3a*R*,8a*R*)-2,2-dimethyl-4,4,8,8-tetraphenyltetrahydro-[1,3]dioxolo[4,5-*e*][1,3,2]dioxaphosphepin-6-yl)oxy)-5,5'-dimethoxy-[1,1'-biphenyl]-2-ols (297 mg, 0.35 mmol) in THF (3 ml) wird auf -20 °C abgekühlt und langsam mit einer Lösung von n-Butyllithium in Hexan (0.53 M, 0.66 ml, 0.35 mmol) versetzt. Nach etwa 20 Minuten wird die Reaktionsmischung bei 0 °C mit einer Lösung des (4*R*,5*R*)-2-Chloro-4,5-diphenyl-1,3,2-dioxaphospholans (103 mg, 0.37 mmol) in THF (3 ml) versetzt. Nach dem Rühren über Nacht bei Raumtemperatur wird das Lösemittel unter Vakuum entfernt und der verbleibende Feststoff mit Toluol (6 ml) aufgenommen. Nach Filtration und Entfernen des Lösemittels wird der feste Rückstand unter Vakuum bei 60 °C getrocknet. Zur Reinigung wird das Rohprodukt in Acetonitril (4 ml) bei Siedehitze gelöst, nach dem Abkühlen in der Kälte das Produkt abfiltriert und unter Vakuum getrocknet. Das Produkt fällt durch die axiale Chiralität als Diastereomerengemisch an.

Ausbeute: 125 mg weißer Feststoff (33%).

³¹P-NMR (CD₂Cl₂): d +145.2 ppm/+140.0 ppm (17%, 2xd, *J* 7.4 Hz, *Diastereomer A*) und +137.6 ppm/+136.6 ppm (83%, 2xd, J 82 Hz, *Diastereomer B).*

¹H-nmr (CD₂Cl₂): *Diastereomer A*, d 7.60-6.60 (34H, m, Hₐᵣ, überlagert vom *Diastereomer B)*, 5.16 (1H, dd, J 13.9, 8.2 Hz, CH-O), 5.04 (1H, d, J 9.5 Hz, CH-O), 4.87 (1H, dd, J 8.2, 2.1 Hz, CH-O), 4.72 (1H, dd, J 9.5, 2.4 Hz, CH-O), 3.70 (OCH₃), 3.46 (OCH₃), 1.31 (9H, s, C(CH₃)₃), 1.21 (9H, s, C(CH₃)₃), 0.65 (3H, s, CH₃), 0.55 (3H, s, CH₃). *Diastereomer B,* d 7.62-7.02 (30H, m, 30xHₐᵣ), 7.01 (1H, d, *J* 3.1 Hz, Hₐᵣ), 6.74 (1H, d, *J* 3.1 Hz, Hₐᵣ), 6.68-6.63 (2H, m, 2xHₐᵣ), 5.28 (1H, d, *J* 8.1 Hz, CH-O), 4.92 (1H, dd, J 8.0. 1.2 Hz, CH-O), 4.77 (1H, d, J 9.6 Hz, CH-O), 4.68 (1H, dd, J 9.6, 2.2 Hz, CH-O), 3.59 (OCH₃), 3.37 (OCH₃), 1.40 (9H, s, C(CH₃)₃), 1.17 (9H, s, C(CH₃)₃), 0.90 (3H, s, CH₃), 0.46 (3H, s, CH₃).

HRMS (ESI-TOF) [M+H]⁺: m/z berechnet: für C₆₇H₆₈O₁₀P₂ 1095.4365, gefunden1095.4368.

HRMS (ESI-TOF) [M+Na]⁺: m/z berechnet: für C₆₇H₆₈O₁₀P₂ 1117.4180. gefunden1117.4180.

### 2-((3,3'-Di-tert-butyl-2'-(((3aR,8aR)-2,2-dimethyl-4,4,8,8-tetraphenyltetrahydro-[1,3]dioxolo[4,5-e][1,3,2]dioxaphosphepin-6-yl)oxy)-5,5'-dimethoxy-[1,1'-biphenyl]-2-yl)oxy)naphtho[1,8-de][1,3,2]dioxaphosphinin (Verbindung 16)

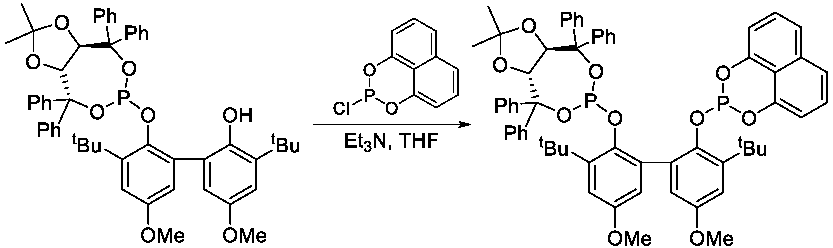

Eine Lösung mit 3,3'-Di-*tert*-butyl-2'-(((3a*R*,8a*R*)-2,2-dimethyl-4,4,8,8-tetraphenyltetrahydro-[1,3]dioxolo[4,5-*e*][1,3,2]dioxaphosphepin-6-yl)oxy)-5,5'-dimethoxy-[1,1'-biphenyl]-2-ol (300 mg, 0.35 mmol) und Triethylamin (107 mg, 1.06 mmol) in THF (2 ml) wird bei 0 °C vorgelegt und anschließend langsam mit 2-Chloronaphtho[1,8-de][1,3,2]dioxaphosphinin (79 mg, 0.35 mmol) in THF (2 ml) versetzt. Nach dem Rühren über Nacht bei Raumtemperatur wird vom gebildeten Hydrochlorid abfiltriert und anschließend das Lösemittel unter Vakuum entfernt. Der verbleibende feste Rückstand wird unter Vakuum getrocknet, durch Umkristallisation aus Acetonitril (Aufbewahrung bei -18°C) gereinigt. Das Produkt fällt durch die axiale Chiralität als Diastereomerengemisch an.

Ausbeute: 160 mg weißer Feststoff (44%).

³¹P-NMR (CD₂Cl₂): d +141.3 ppm/+107.3.0 ppm (12%, 2xd, J 7.5 Hz, *Diastereomer A*) und +131.6 ppm/+100.5 ppm (88%, 2xd, J 132 Hz, *Diastereomer B).*

¹H-NMR (CD₂Cl₂), *Diastereomer A*, d 7.58-6.48 (30H, m, 30xHₐᵣ, überlagert vom Diastereomer B), 5.10 (1H, d, J 8.4 Hz CH-O), 4.91 (1H, dd, J 8.4, 1.4 Hz, CH-O), 3.80 (3H, s, OCH₃), 3.38 (3H, s, OCH₃), 1.43 (9H, s, C(CH₃)₃), 0.90 (9H, s, C(CH₃)₃), 0.77 (3H, s, CH₃), 0.45 (3H, s, CH₃). *Diastereomer B,* d 7.58 (2H, m, 2xHₐᵣ), 7.50-7.17 (20. m, 20xHₐᵣ), 7.04-6.97 (3H, m, 3xHₐᵣ), 6.87-6.81 (2H, m, 2xHₐᵣ), 6.65 (1H, d, *J* 3.1 Hz, Hₐᵣ), 6.62 (1H, dt, J 7.5, 1.0 Hz, Hₐᵣ), 6.48 (1H, d, J 3.2 Hz, Hₐᵣ), 5.41 (1H, d, *J* 8.1 Hz, CH-O), 4.87 (1H, dd, J 8.1, 0.7 Hz, CH-O), 3.74 (3H, s, OCH₃), 3.31 (3H, s, OCH₃), 1.36 (9H, s, C(CH₃)₃), 0.90 (9H, s, C(CH₃)₃), 0.58 (3H, s, CH₃), 0.49 (3H, s, CH₃).

HRMS (ESI-TOF) [M+H]⁺: m/z berechnet: für C₆₃H₆₂O₁₀P₂ 1041.3896, gefunden: 1041.3917.

HRMS (ESI-TOF) [M+Na]⁺: m/z berechnet: für C₆₃H₆₂O₁₀P₂ 1063.3711, gefunden: 1063.3729.

| | | | | |
|---|---|---|---|---|
| Elementaranalyse: | berechnet: | C 72.68% | H 6.00% | P 5.95% |
| | gefunden: | C 72.56% | H 5.98% | P 6.08% |

### (3aR,8aR)-6-((3,3'-Di-tert.-butyl-2'-((5,5-dimethyl-1,3,2-dioxaphosphinan-2-yl)oxy)-5,5'-dimethoxy-[1,1'-biphenyl]-2-yl)oxy)-2,2-dimethyl-4,4,8,8-tetraphenyltetrahydro-[1,3]dioxolo[4,5-e][1,3,2]dioxaphosphepin (Verbindung 17)

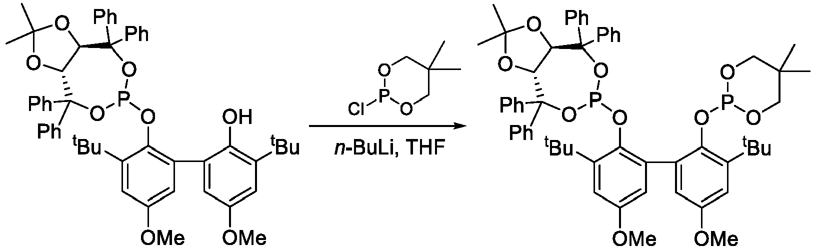

Eine auf -20 °C abgekühlte Lösung des 3,3'-Di-tert-butyl-2'-(((3aR,8aR)-2,2-dimethyl-4,4,8,8-tetraphenyltetrahydro[1,3]dioxolo[4,5-*e*][1,3,2]dioxaphosphepin-6-yl)oxy)-5,5'-dimethoxy-[1,1'-biphenyl]-2-ols (501 mg, 0.59 mmol) in THF (4 ml) wird langsam mit einer Lösung von n-Butyllithium in Hexan (0.53 M, 1.10 ml, 0.59 mmol) versetzt. Nach etwa 20 Minuten wird die Reaktionsmischung bei 0 °C mit einer Lösung des 2-Chloro-5,5-dimethyl-1,3,2-dioxaphosphinans (104 mg, 0.62 mmol) in THF (2 ml) versetzt. Nach dem Rühren über Nacht bei Raumtemperatur wird das Lösemittel unter Vakuum entfernt und der verbleibende Feststoff mit Toluol (7 ml) aufgenommen. Nach der Filtration und Entfernen des Lösemittels vom Filtrat wird der verbleibende feste Rückstand unter Vakuum bei 60°C getrocknet. Zur Reinigung wird das Rohprodukt in Acetonitril (5 ml) bei Siedehitze gelöst, nach dem Abkühlen in der Kälte das Produkt abfiltriert und unter Vakuum getrocknet. Das Produkt fällt durch die axiale Chiralität als Diastereomerengemisch an.

Ausbeute: 245 mg weißer Feststoff (42%).

³¹P-NMR (CD₂Cl₂): d +146.8 ppm/+117.0 ppm (10%, 2xd, *J* 4.1 *Hz, Diastereomer A*) und +136.9 ppm/+116.4 ppm (90%, 2xd, J 16.9 Hz, *Diastereomer B).*

¹H-NMR (CD₂Cl₂), *Diastereomer B,* d 7.52-7.13 (18H, m, 18xHₐᵣ), 6.99 (1H, d, *J 3.1* Hz, Hₐᵣ), 6.92-6.87 (2H, m, 2xHₐᵣ), 6.83 (1H, d, J 3.2 Hz, Hₐᵣ), 6.60 (1H, dd, J 3.1, 1.1 Hz, Hₐᵣ), 6.58 (1H, d, J 3.2 Hz, Hₐᵣ), 5.22 (1H, d, *J* 8.0 Hz, CH-O), 4.83 (1H, dd, J 8.0. 1.5 Hz, CH-O), 4.07 (1H, dd, J 10.6, 3.1 Hz, Hₐ-CH₂O), 3.88 (1H, dd, J 10.8, 3.4 Hz, Hₐ-CH₂O), 3.74 (3H, s, OCH₃), 3.28 (3H, s, OCH₃), 3.28 (1H, dt, J 10.6, 2.8 Hz, H_{b}-CH₂O), 3.03 (1H, dt, J 10.9, 2.9 Hz, H_{b}-CH₂O), 1.26 (9H, s, C(CH₃)₃), 1.18 (9H, s, C(CH₃)₃), 1.12 (3H, s, CH₃), 0.73 (3H, s, CH₃), 0.59 (3H, s, CH₃), 0.50 (3H, s, CH₃).

HRMS (ESI-TOF) [M+H]⁺: m/z berechnet: für C₅₈H₆₆O₁₀P₂ 985.4210. gefunden: 985.4213.

HRMS (ESI-TOF) [M+Na]⁺: m/z berechnet: für C₅₈H₆₆O₁₀P₂ 1007.4023, gefunden: 1007.4017.

| | | | | |
|---|---|---|---|---|
| Elementaranalyse: | berechnet: | C 70.72% | H 6.75% | P 6.29% |
| | gefunden: | C 70.67% | H 6.85% | P 6.20% |

### 2,4,8,10-Tetra-tert-butyl-6-((3,3',5,5'-tetra-tert-butyl-2'-(((3aR,8aR)-2,2-dimethyl-4,4,8,8-tetraphenyltetrahydro-[1,3]dioxolo[4,5-e][1,3,2]dioxaphosphepin-6-yl)oxy)-[1,1'-biphenyl]-2-yl)oxy)dibenzo[d,f][1,3,2]dioxaphosphepin

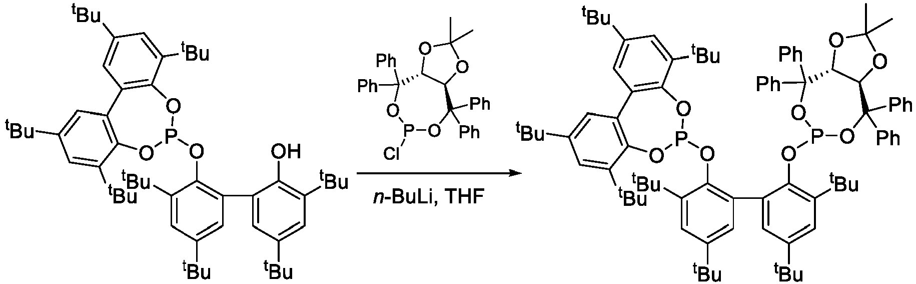

Eine auf -20 °C abgekühlte Lösung des 3,3',5,5'-Tetra-tert-butyl-2'-((2,4,8,10-tetra-tert-butyldibenzo[*d,f*][1,3,2]dioxaphosphepin-6-yl)oxy)-[1,1'-biphenyl]-2-ols (541 mg, 0.64 mmol) in THF (5 ml) wird langsam mit einer Lösung von n-Butyllithium in Hexan (0.53 M, 1.20 ml, 0.64 mmol) versetzt. Nach etwa 20 Minuten wird die Reaktionsmischung bei 0°C mit einer Lösung des (3aR,8aR)-6-Chloro-2,2-dimethyl-4,4,8,8-tetraphenyltetrahydro-[1,3]dioxolo[4,5-*e*][1,3,2]dioxaphosphepins (356 mg, 0.67 mmol) in THF (4 ml) versetzt. Nach dem Rühren über Nacht bei Raumtemperatur wird das Lösemittel unter Vakuum entfernt und der verbleibende Feststoff mit Toluol (8 ml) aufgenommen. Nach Filtration und Entfernen des Lösemittels vom Filtrat wird der verbleibende feste Rückstand unter Vakuum getrocknet. Zur Reinigung wird das Rohprodukt in Acetonitril (9 ml) bei Siedehitze gelöst, nach dem Abkühlen das Produkt abfiltriert und unter Vakuum getrocknet. Das Produkt fällt durch axiale Chiralität als Diastereomerengemisch an.

Ausbeute: 610 mg weißer Feststoff (71%).

³¹P-NMR (CD₂Cl₂): d +153.3 ppm/+143.8 ppm (58%, 2xd, *J* 5.7 Hz, *Diastereomer A*) und +140.4 ppm/+137.0 ppm (42%, 2xs, *Diastereomer B).*

¹H-NMR (CD₂Cl₂), *Diastereomer A*, d 7.60-6.86 (27H, m, 27xHₐᵣ), 6.37 (1H, m, Hₐᵣ), 5.00 (1H, d, J 8.5 Hz, CH-O), 4.67 (1H, dd, J 8.5, 2.9 Hz, CH-O), 1.69 (9H, s, C(CH₃)₃), 1.46 (9H, s, C(CH₃)₃), 1.37 (9H, s,

C(CH₃)₃), 1.35 (9H, s, C(CH₃)₃), 1.31 (9H, s, C(CH₃)₃), 1.18 (9H, s, C(CH₃)₃), 1.18 (3H, s, CH₃), 1.03 (9H, s, C(CH₃)₃), 0.88 (9H, s, C(CH₃)₃), 0.26 (3H, s, CH₃). *Diastereomer B,* d 7.60-6.86 (28H, m, 28xHₐᵣ), 5.03 (1H, d, *J* 8.0 Hz, CH-O), 4.86 (1H, dd, J 8.0. 1.5 Hz, CH-O), 1.50 (9H, s, C(CH₃)₃), 1.38 (9H, s, C(CH₃)₃), 1.35 (9H, s, C(CH₃)₃), 1.32 (9H, s, C(CH₃)₃), 1.30 (9H, s, C(CH₃)₃), 1.12 (9H, s, C(CH₃)₃), 1.07 (9H, s, C(CH₃)₃), 0.81 (9H, s, C(CH₃)₃), 0.54 (3H, s, CH₃), 0.46 (3H, s, CH₃).

HRMS (ESI-TOF) [M+H]⁺: m/z berechnet: für C₈₇H₁₀₈O₈P₂ 1343.7598, gefunden: 1343.7581.

HRMS (ESI-TOF) [M+Na]⁺: m/z berechnet: für C₈₇H₁₀₈O₈P₂ 1365.7412, gefunden: 1365.7407.

| | | | | |
|---|---|---|---|---|
| Elementaranalyse: | berechnet: | C 77.77% | H 8.10% | P 4.61% |
| | gefunden: | C 77.72% | H 8.16% | P 4.55% |

### (3aR,8aR)-2,2-Dimethyl-4,4,6,8,8-pentaphenyltetrahydro-[1,3]dioxolo[4,5-e][1,3,2]dioxaphosphepin

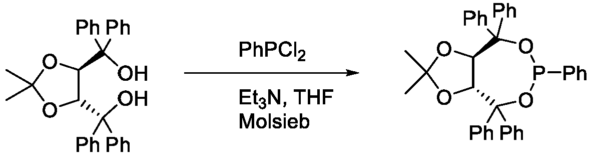

(-)-TADDOL (467 mg,1.00 mmol) und Molsieb (4 Å, 125 mg) in THF (5 ml) werden bei 0°C mit Triethylamin (233 mg, 2.30 mmol) versetzt. Anschließend gibt man unter Rühren tropfenweise das Dichlorphenylphosphin (197 mg, 1.10 mmol) hinzu, lässt nach etwa 30 Minuten auf Raumtemperatur erwärmen und über Nacht rühren. Zur Aufarbeitung wird vom ausgefallenen Hydrochlorid abfiltriert und der Rückstand mit etwas THF nachgewaschen. Das Lösemittel wird unter Vakuum entfernt und der verbleibende feste Rückstand durch Säulenchromatographie (Eluent: Cyclohexan/AcOEt 98/2 bis 90/10) gereinigt. Zur Verbesserung der Reinheit wurde das so erhaltene Phosphonit mit Ether/Chloroform umkristallisiert.

Ausbeute: 335 mg weißer Feststoff (57%), Smp. = 220-222°C, [a]_{D}²⁴ = -87° (c 1.00. CHCl₃)

³¹P-NMR (CDCl₃): d +156.4 ppm.

¹H-NMR (CDCl₃): d 7.94-7.83 (4H, m, 4xHₐᵣ), 7.67-7.60 (2H, m, 2xHₐᵣ), 7.56-7.43 (7H, m, 7xHₐᵣ), 7.41-7.15 (12H, m, 12xHₐᵣ), 5.65 (1H, dd, J 8.6, 4.7 Hz, CH-O), 4.81 (1H, d, J 8.6 Hz, CH-O), 1.57 (3H, s, CH₃), 0.23 (3H, s, CH₃).

¹³C-NMR (CDCl₃): d 146.8 (Cₐᵣ), 145.8 (d, *J* 4.1 Hz, Cₐᵣ), 141.9 (d, *J* 1.6 Hz, Cₐᵣ), 141.3 (d, J 2.2 Hz, Cₐᵣ), 141.1 (d, *J* 10.6 Hz, Cₐᵣ-P), 130.7 (CₐᵣH), 129.9 (d, J 23.9 Hz, 2xCₐᵣH), 129.4 (2xCₐᵣH), 128.5 (d, J 3.3 Hz, 2xCₐᵣH), 128.4 (d, *J* 6.9 Hz, 2xCₐᵣH), 128.1 (2xCₐᵣH), 127.9 (2xCₐᵣH), 127.6 (2xCₐᵣH), 127.6 (d, J 9.5 Hz, 2xCₐᵣH), 127.4 (2xCₐᵣH), 127.3 (2xCₐᵣH), 127.2 (d, J 6.8 Hz, 2xCₐᵣH), 127.2 (2xCₐᵣH), 111.4 (^{t}CMe₂), 83.9 (d, J 3.9 Hz, CH-O), 83.2 (d, J 7.4 Hz, C-O), 82.6 (d, J 23.7 Hz, CH-O), 82.1 (d, J 4.5 Hz, C-O), 27.9 (CH₃), 24.7 (CH₃).

HRMS (ESI-TOF) [M+H]⁺: m/z berechnet: für C₃₇H₃₃O₄P 573.2195, gefunden: 573.2181.

HRMS (ESI-TOF) [M+Na]⁺: m/z berechnet: für C₃₇H₃₃O₄P 595.2009, gefunden: 595.2023.

### Katalyseversuche

Die Hydroformylierung wurde in einem mit Druckkonstanthaltung, Gasflussmessung, Begasungsrührer und Druckpipette ausgestatteten 200 ml-Autoklaven der Fa. Premex Reactor AG, Lengau, Schweiz, durchgeführt. Zur Minimierung eines Einflusses von Feuchtigkeit und Sauerstoff wurde das als Solvens benutzte Toluol in einem Pure Solv. MD-7 System gereinigt und unter Argon aufbewahrt. Cis/trans-2-Penten (Aldrich) wurde über Natrium am Rückfluss erhitzt und unter Argon destilliert. Im Autoklav wurden unter Argonatmosphäre Lösungen der Katalysatorvorstufe und des Liganden jeweils in Toluol gemischt. Als Katalysatorvorstufe kam [(acac)Rh(COD)] (Umicore, acac=Acetylacetonat-Anion; COD=1,5-Cyclooctadien), zum Einsatz. Der Autoklav wurde bei einem Gesamtgasdruck (Synthesegas: Linde; H₂ (99,999%) : CO (99,997%) = 1:1) von 12 bar für den Enddruck von 20 bar unter Rühren (1500 U/min) aufgeheizt. Nach Erreichen der Reaktionstemperatur wurde das in der Druckpipette befindliche Olefin mit einem Überdruck von ca. 3 bar in den Autoklaven gepresst. Die Reaktion wurde bei konstantem Druck (Nachdruckregler der Fa. Bronkhorst, NL) über 4 h geführt. Der Autoklav wurde nach Ablauf der Reaktionszeit auf Zimmertemperatur abgekühlt, unter Rühren entspannt und mit Argon gespült. Jeweils 1 ml der Reaktionsmischung wurden entnommen, mit 10 ml Pentan verdünnt und gaschromatographisch analysiert: HP 5890 Series II plus, PONA, 50 m x 0.2 mm x 0.5 µm.

Die Ergebnisse der Versuchsreihe sind in der nachfolgenden Tabelle aufgelistet:

| Ligand | Ausbeute [%] |
|---|---|
| **(1)** | 98 |
| **(2)** | 95 |
| **(3)** | 99 |
| **(4)** | 96 |
| **(5)** | 99 |
| **(6)** | 99 |
| **(7)** | 97 |
| **(8)** | 99 |
| **(9)** | 100 |
| **(10)** | 100 |
| **(11)** | 75 |
| **(12)** | 86 |
| **(13)** | 89 |
| **(14)** | 93 |
| **(15)** | 76 |
| **(16)** | 68 |
| **(17)** | 84 |

Die durchgeführten Versuche belegen, dass die gestellte Aufgabe durch die erfindungsgemäßen Verbindungen gelöst wird.

## Patentansprüche

1. Verbindung gemäß einer der Formeln (1) bis (17):
